(19) Europäisches Patentamt
European Patent Office
Office européen des brevets

(11) **EP 4 231 601 A1**

(12) **EUROPEAN PATENT APPLICATION**
published in accordance with Art. 153(4) EPC

(43) Date of publication:
**23.08.2023 Bulletin 2023/34**

(21) Application number: **21880629.7**

(22) Date of filing: **18.10.2021**

(51) International Patent Classification (IPC):
*H04L 27/36* (2006.01)     *H04L 5/00* (2006.01)
*H04L 27/26* (2006.01)     *H04L 25/03* (2006.01)
*H04L 1/08* (2006.01)      *H04W 72/12* (2023.01)

(52) Cooperative Patent Classification (CPC):
**H04L 1/08; H04L 5/00; H04L 25/03; H04L 27/26;
H04L 27/36; H04W 72/12**

(86) International application number:
**PCT/KR2021/014449**

(87) International publication number:
**WO 2022/080983 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2020 KR 20200134122**

(71) Applicant: **LG Electronics Inc.**
**Yeongdeungpo-gu**
**Seoul 07336 (KR)**

(72) Inventors:
• **YOU, Hyangsun**
  **Seoul 06772 (KR)**
• **KO, Hyunsoo**
  **Seoul 06772 (KR)**
• **YANG, Suckchel**
  **Seoul 06772 (KR)**

(74) Representative: **Plasseraud IP**
**66, rue de la Chaussée d'Antin**
**75440 Paris Cedex 09 (FR)**

(54) **SCRAMBLING FOR PUSCH REPETITION**

(57)    The present invention relates to a method for applying different scramblings according to time intervals while PUSCH repetition is performed, and a device using the method, wherein a coded bit is scrambled, and a scrambled bit is phase-scrambled, so that phases of bits transmitted through a PUSCH are different from each other.

## FIG. 21

**EP 4 231 601 A1**

Performing scrambling on coded bits — S2110

Transmitting the first bit and the second bit
generated based on the scrambling
to the base station through the PUSCH — S2120

**Description**

### TECHNICAL FIELD

This disclosure relates to wireless communication.

### BACKGROUND ART

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (UE) sensitive to reliability and latency are under discussion. Introduction of next-generation RAT considering enhanced mobile broadband communication, massive MTC, and ultra-reliable and low-latency communication (URLLC) is under discussion. In this disclosure, for convenience of description, this technology may be referred to as new RAT or new radio (NR).
In a next-generation communication system, PUSCH repetition for coverage enhancement of a UE may be considered. PUSCH repetition may include type A and type B.
Here, the repeated transmission may be performed through the same resource element (RE) using the same scrambling sequence for the same coded bit. In this case, the repeated transmission may become a burden in terms of inter-cell interference.

### DISCLOSURE

### TECHNICAL SOLUTION

The present specification proposes a method of differently applying scrambling according to time intervals during PUSCH repetition and an apparatus using the method.

### ADVANTAGEOUS EFFECTS

According to the present specification, by applying different scrambling between PUSCH repetition slots and simultaneously performing modulated symbol-level combining, an energy combining gain can be obtained in PUSCH repetition transmission, while reducing the effect of interference on other signals.
Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

The following drawings are intended to illustrate specific embodiments of the present specification. The designations of specific devices or the designations of specific signals/messages/fields shown in the drawings are for illustrative purposes only, and the technical features of this specification are not limited to the specific designations used in the drawings below.

FIG. 1 shows a wireless communication system to which the present disclosure can be applied.
FIG. 2 is a diagram showing a wireless protocol architecture for a user plane.
FIG. 3 is a diagram showing a wireless protocol architecture for a control plane.
FIG. 4 shows another example of a wireless communication system to which the technical features of the present disclosure can be applied.
FIG. 5 illustrates a functional division between an NG-RAN and a 5GC.
FIG. 6 illustrates an example of a frame structure that may be applied in NR.
FIG. 7 illustrates a slot structure.
FIG. 8 illustrates an example in which PUSCH is transmitted based on PUSCH repetition type A.
FIG. 9 illustrates an example in which PUSCH is transmitted based on PUSCH repetition type B.
FIG. 10 illustrates another example in which PUSCH is transmitted based on PUSCH repetition type B.

FIG. 11 schematically illustrates an example of SB-FD and SS-FD.

FIG. 12 schematically illustrates an example in which time resources operating in half duplex (HD) and time resources operating in full duplex (FD) such as SB-FD or SS-FD coexist.

FIG. 13 shows an example of processing of a UL-SCH transport block.

FIG. 14 shows an example of a constellation diagram of BPSK, QPSK, and 8-PSK.

FIG. 15 shows an example of a constellation of 16 QAM.

FIG. 16 shows an example in which a phase scrambling process is added between modulation and layer mapping processes.

FIG. 17 illustrates an example in which a phase scrambling process is added between layer mapping and transform precoding.

FIG. 18 shows an example of 16 values of modulated symbols that can be mapped when 16QAM is applied.

FIG. 19 illustrates an example in which a phase scrambling process is added between transform precoding and precoding processes.

FIG. 20 illustrates an example in which a phase scrambling process is added between precoding and virtual resource block mapping processes.

FIG. 21 is a flowchart of an example of a method for performing repeated PUSCH transmissions by a UE according to some implementations of the present specification.

FIG. 22 is a flowchart of an example of a method of repeatedly receiving a PUSCH by a base station according to some implementations of the present specification.

FIG. 23 illustrates a communication system 1 applied to the present specification.

FIG. 24 illustrates a wireless device applicable to the present disclosure.

FIG. 25 illustrates a signal processing circuit for a transmission signal.

FIG. 26 shows another example of a wireless device applied to the present disclosure.

FIG. 27 illustrates a portable device applied to the present disclosure.

FIG. 28 illustrates a vehicle or an autonomous driving vehicle applied to the present disclosure.

FIG. 29 illustrates a vehicle applied to the present disclosure.

FIG. 30 illustrates an XR device applied to the present disclosure.

FIG. 31 illustrates a robot applied to the present disclosure.

FIG. 32 illustrates an AI device applied to the present disclosure.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features that are individually described in one drawing in this specification may be implemented individually or simultaneously.

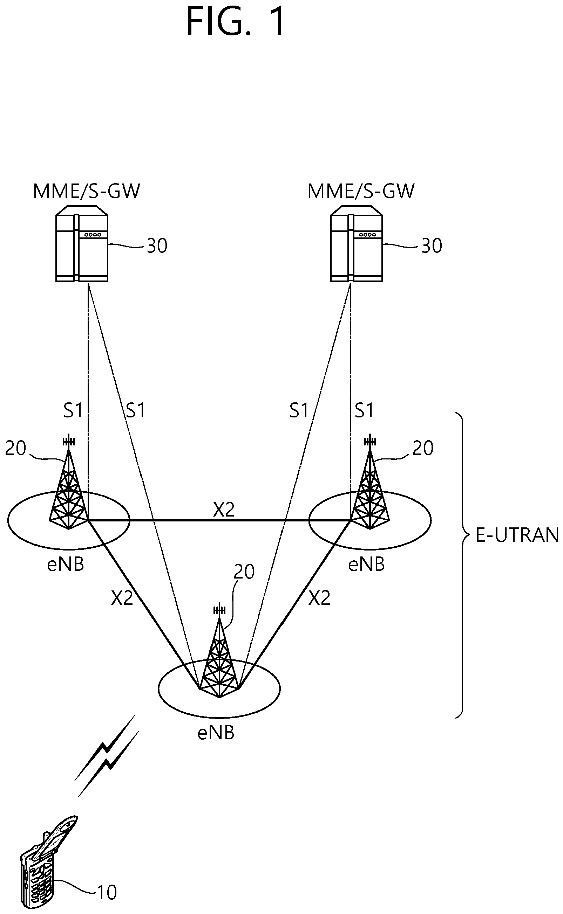

FIG. 1 shows a wireless communication system to which the present disclosure may be applied. The wireless communication system may be referred to as an Evolved-UMTS Terrestrial Radio Access Network (E-UTRAN) or a Long Term Evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

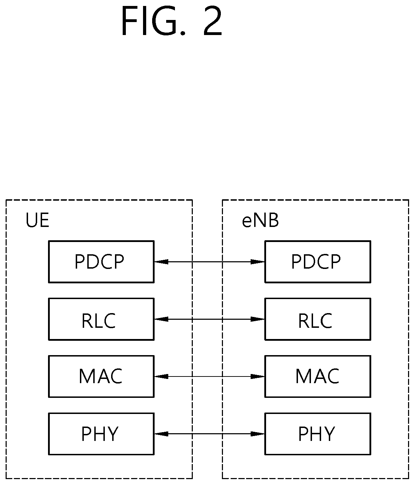

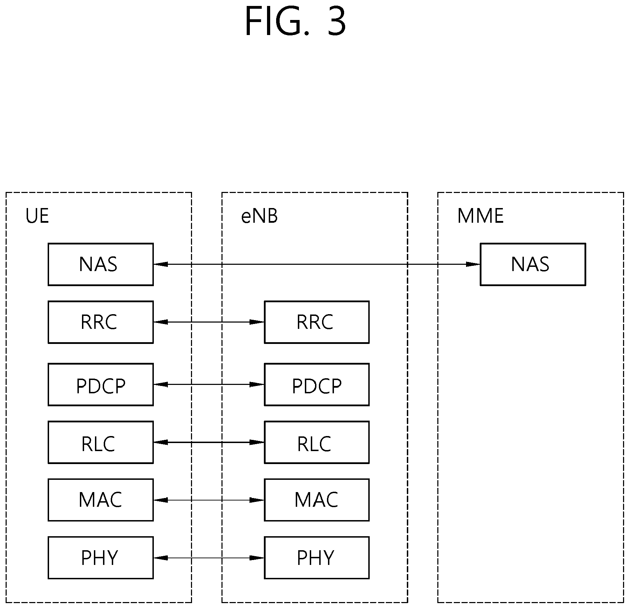

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer(=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time of transmission, and may be, for example, a subframe or a slot.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

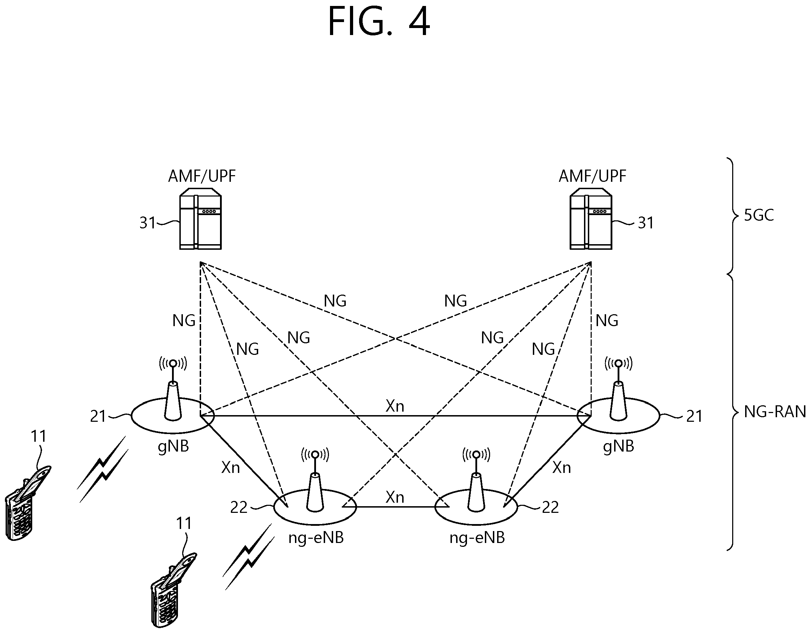

FIG. 4 illustrates another example of a wireless communication system to which technical features of the present disclosure are applicable.

Specifically, FIG. 4 shows system architecture based on a 5G new radio access technology (NR) system. Entities used in the 5G NR system (hereinafter, simply referred to as "NR") may absorb some or all functions of the entities (e.g., the eNB, the MME, and the S-GW) introduced in FIG. 1. The entities used in the NR system may be identified by terms with "NG" to be distinguished from LTE entities.

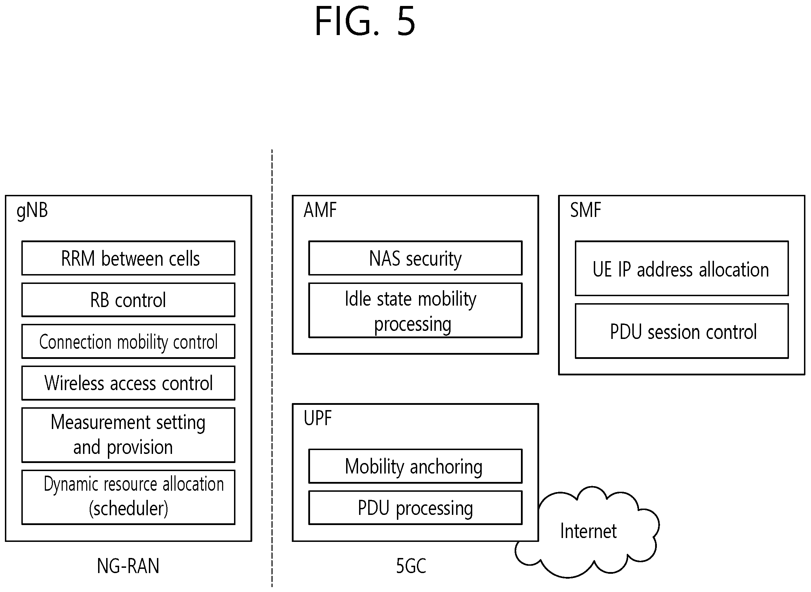

Referring to FIG. 4, the wireless communication system includes at least one UE 11, a next-generation RAN (NG-RAN), and a 5G core network (5GC). The NG-RAN includes at least one NG-RAN node. The NG-RAN node is an entity corresponding to the BS 20 illustrated in FIG. 5. The NG-RAN node includes at least one gNB 21 and/or at least one ng-eNB 22. The gNB 21 provides an end point of NR control-plane and user-plane protocols to the UE 11. The ng-eNB 22 provides an end point of E-UTRA user-plane and control-plane protocols to the UE 11.

The 5GC includes an access and mobility management function (AMF), a user plane function (UPF), and a session management function (SMF). The AMF hosts functions of NAS security and idle-state mobility processing. The AMF is an entity that includes the functions of a conventional MME. The UPF hosts functions of mobility anchoring function and protocol data unit (PDU) processing. The UPF is an entity that includes the functions of a conventional S-GW. The SMF hosts functions of UE IP address allocation and PDU session control.

The gNB and the ng-eNB are connected to each other via an Xn interface. The gNB and the ng-eNB are also connected to the 5GC through an NG interface. Specifically, the gNB and the ng-eNB are connected to the AMF through an NG-C interface, and to the UPF through an NG-U interface.

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

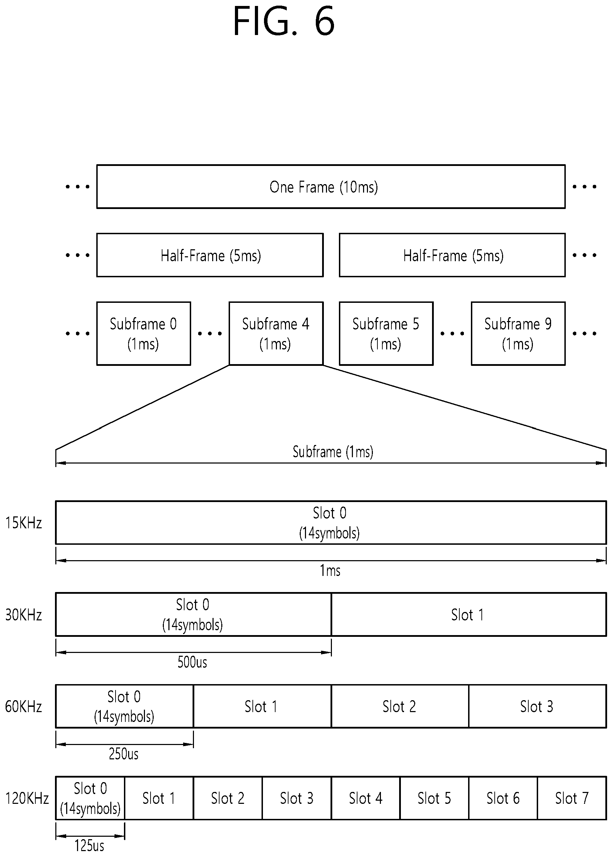

FIG. 6 illustrates an example of a frame structure that may be applied in NR.

Referring to FIG. 6, a frame may be configured in 10 milliseconds (ms), and may include 10 subframes configured in 1 ms.

In NR, uplink and downlink transmission may be composed of frames. A radio frame has a length of 10 ms and may be defined as two 5 ms half-frames (HF). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

One or a plurality of slots may be included in the subframe according to subcarrier spacing.

The following table 1 illustrates a subcarrier spacing configuration $\mu$.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal Extended |

(continued)

| μ | $\Delta f = 2^{\mu} \cdot 15$ [kHz] | Cyclic prefix |
|---|---|---|
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations μ.

[Table 2]

| μ | $N^{slot}_{symb}$ | $N^{frame\mu}_{slot}$ | $N^{subframe\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 illustrates that the number of symbols per slot, the number of slots per frame, and the number of slots per subframe vary depending on the SCS, in case of using an extended CP.

[Table 3]

| SCS ($15 \cdot 2^{\mu}$) | $N^{slot}_{symb}$ | $N^{frame,u}_{slot}$ | $N^{subframe,u}_{slot}$ |
|---|---|---|---|
| 60kHz (μ=2) | 12 | 40 | 4 |

NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 4. For convenience of description, FR1 of the frequency ranges used for an NR system may refer to a "sub 6 GHz range", and FR2 may refer to an "above 6 GHz range" and may be referred to as a millimeter wave (mmW).

[Table 4]

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 5. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 5]

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

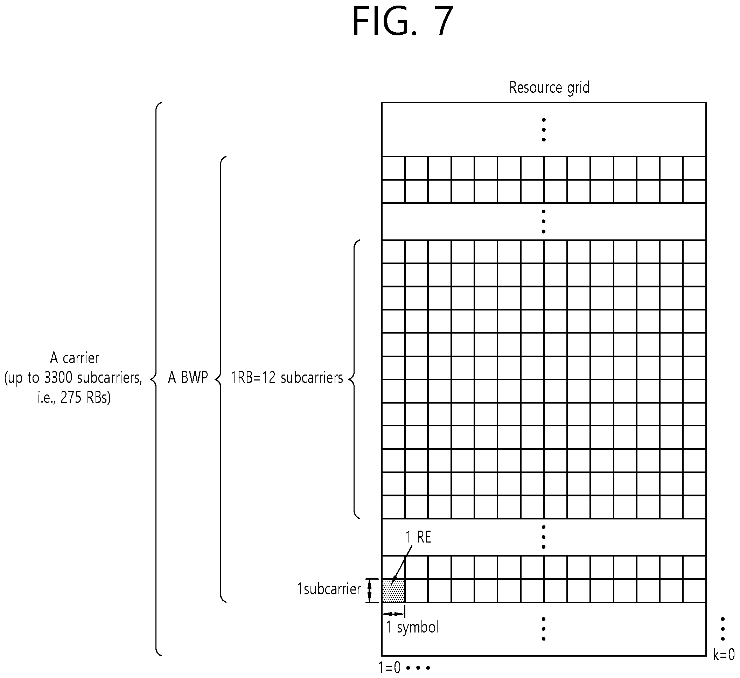

FIG. 7 illustrates a slot structure.

Referring to FIG. 7, a slot may include a plurality of symbols in a time domain. For example, in case of a normal CP, one slot may include 14 symbols. However, in case of an extended CP, one slot may include 12 symbols. Or, in case of a normal CP, one slot may include 7 symbols. However, in case of an extended CP, one slot may include 6 symbols.

A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an activated BWP. In a resource grid, each element may be referred to as a resource element (RE), and one complex symbol may be mapped thereto.

A physical downlink control channel (PDCCH) may include one or more control channel elements (CCEs) as illustrated in the following table.

[Table 6]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Meanwhile, a new unit called a control resource set (CORESET) may be introduced in the NR. The UE may receive a PDCCH in the CORESET.

Hereinafter, physical uplink shared channel (PUSCH) repetition will be described.

In a next-generation communication system, PUSCH repetition for coverage enhancement of a UE may be considered. PUSCH repetition may include type A and type B.

Hereinafter, PUSCH repetition type A will be described.

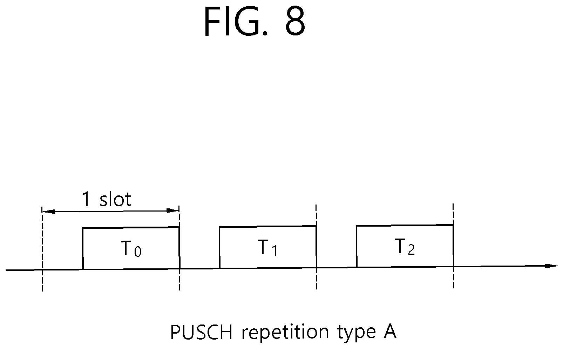

FIG. 8 illustrates an example in which PUSCH is transmitted based on PUSCH repetition type A.

PUSCH repetition type A is a slot-based repetition method. As shown in FIG. 8, repetition is performed with the same PUSCH transmission start symbol position and PUSCH transmission symbol length for each slot. At this time, if an invalid symbol that cannot be used for PUSCH transmission exists among symbol resources constituting a specific PUSCH repetition, transmission of the corresponding PUSCH repetition is dropped and is not performed. For example, when a total of 4 repeated PUSCH transmissions of Rep0, Rep1, Rep2, and Rep3 are to be performed, if an invalid symbol is included in symbol resources constituting Rep1, transmission of Rep1 is dropped, and only transmissions of Rep0, Rep2, and Rep3 are performed. Thus, the actual number of repetitions performed may be less than the configured number of repetitions.

For PUSCH repetition type A, the UE may be configured with a frequency hopping by higher layer parameters.

One of two frequency hopping modes can be set:

Intra-slot frequency hopping, applicable to single slot and multi-slot PUSCH transmission.

Inter-slot frequency hopping, applicable to multi-slot PUSCH transmission.

Hereinafter, PUSCH repetition type B will be described.

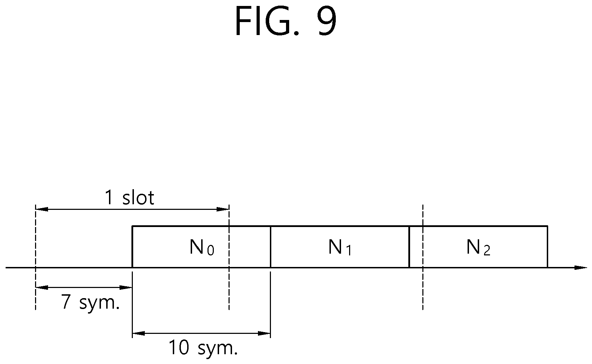

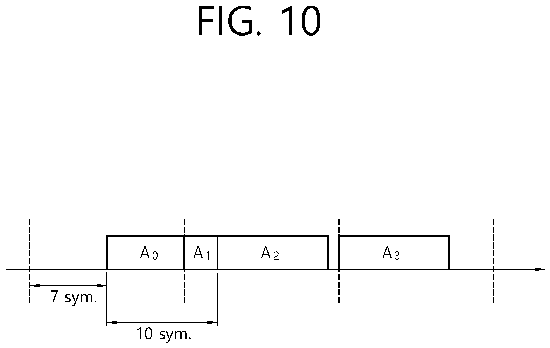

FIG. 9 illustrates an example in which PUSCH is transmitted based on PUSCH repetition type B. FIG. 10 illustrates another example in which PUSCH is transmitted based on PUSCH repetition type B.

In the PUSCH repetition type B, repetition is performed in units of a symbol length in which an actual PUSCH is transmitted. That is, when the PUSCH is transmitted in 10 symbols as shown in FIG. 9, PUSCH repetition is performed in units of 10 consecutive symbols. Repetition for determining PUSCH repetition transmission time resources without considering slot boundaries, invalid symbols, etc. is called nominal repetition. However, in case of actual PUSCH repetition, one PUSCH cannot be transmitted on a slot boundary. When the PUSCH transmission includes a slot boundary, two actual repetitions are performed across the slot boundary as shown in FIG. 10. In addition, one PUSCH transmission can be performed only through consecutive symbols. When an invalid symbol exists in a time resource on which a PUSCH repetition is to be transmitted, actual repetitions are configured using consecutive symbols with the invalid symbol as a boundary. For example, if symbols #0 to #9 constitute one nominal repetition and symbols #3 to #5 are invalid symbols, i) symbols #0 to #2 and ii) symbols #6 to #9, excluding invalid symbols, each constitute one actual repetition.

f a symbol (e.g., a downlink symbol indicated by DCI format 2_0) that cannot be used for PUSCH transmission is included in one actual repetition resource, the actual repetition transmission is dropped and not performed.

For PUSCH repetition type B, the UE may be configured with a frequency hopping by higher layer parameters.

The frequency hopping mode for PUSCH transmission configured in type 2 follows the configuration of the active DCI format. One of two frequency hopping modes can be set:

Inter-repetition frequency hopping.
Inter-slot frequency hopping.
Hereinafter, full duplex operation for NR will be described.

In 5G, new service types such as extended reality (XR), AI-based services, and selfdriving cars are emerging, which are characterized by dynamically changing traffic in both DL and UL directions and low latency requirements for packet delivery. In 5G service, traffic load will increase explosively to support these various new use cases.

On the other hand, the existing semi-static or dynamic TDD UL/DL configuration has limitations such as transmission time delay and interference between operators. Existing FDD schemes have limitations in terms of efficient frequency resource utilization for DL/UL directions.

Therefore, introduction of a full duplex operation in a single carrier is being discussed for low latency and efficient resource utilization in NR.

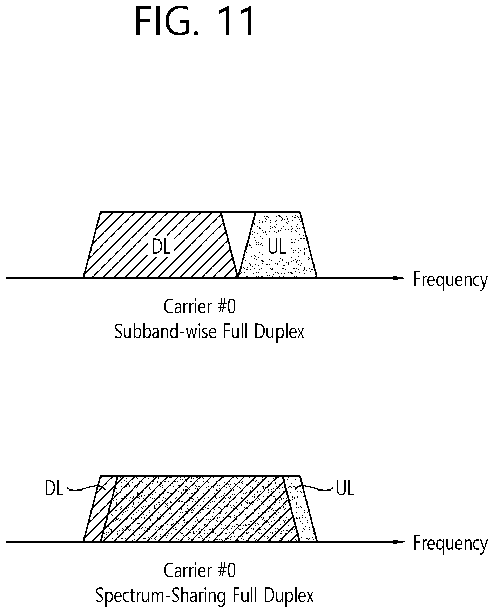

FIG. 11 schematically illustrates an example of SB-FD and SS-FD.

As an example of a method of applying full duplex in an intra-carrier, subband-wise full duplex (SB-FD) and spectrum-sharing full duplex (SS-FD) may be considered as shown in FIG. 6. In the case of SB-FD, transmission and reception of DL and UL are performed using different frequency resources in the same carrier. That is, DL and UL have different frequency resources for the same time resource. In the case of SS-FD, transmission and reception of DL and UL are performed through the same frequency resource or overlapped frequency resources in the same carrier. That is, DL and UL may have the same or overlapping frequency resources for the same time resource.

This full-duplex operation may be used in combination with a conventional half-duplex operation. In the conventional half-duplex-based TDD operation, only some time resources can be used for full-duplex operation. An SB-FD or SS-FD operation may be performed on a time resource for performing a full duplex operation.

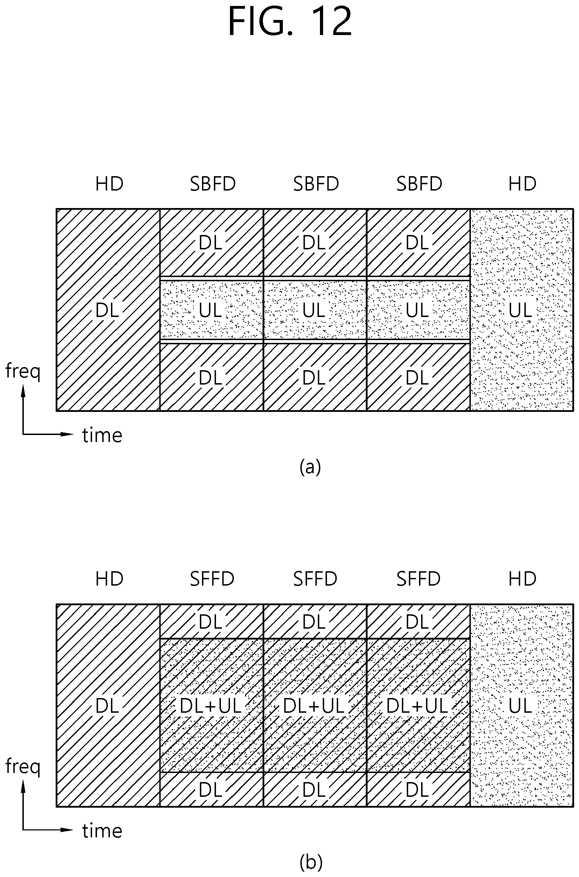

FIG. 12 schematically illustrates an example in which time resources operating in half duplex (HD) and time resources operating in full duplex (FD) such as SB-FD or SS-FD coexist.

In (a) of FIG. 12, some time resources operate in SB-FD and the remaining time resources operate in HD. In (b) of FIG. 12, some time resources operate in SS-FD and the remaining time resources operate in HD. In this case, the unit of time resource may be, for example, a slot or a symbol.

In time resources operating with SB-FD, some frequency resources are used as DL resources and some frequency resources are used as UL resources. Between DL and UL frequency resources, there may be a guard subband (or guard frequency resource or guard subcarrier(s)) that is not used in both DL and UL and becomes empty. In time resources operating with SF-FD, all frequency resources can be used for both DL and UL. Alternatively, some frequency resources at one or both ends of the carrier may not be used for DL and/or UL in order to reduce the influence of interference from other adjacent carriers (i.e. ACI (adjacent carrier interference)). That is, one or both ends of the carrier may be used as a guard band that is not used for both DL and UL. Alternatively, to reduce ACI affecting UL reception, one or both ends of the carrier may be used only for DL transmission.

In this specification, a frequency resource operating in DL among all frequency resources in time resources operating in FD is referred to as a DL sub-band, and a frequency resource operating in UL is referred to as a UL sub-band.

In the case of the full duplex operation as described above, the full duplex operation can be performed both in terms of the gNB and the UE. That is, both the gNB and the UE can simultaneously perform transmission and reception of DL and UL using the same or different frequency resources in the same time resource. On the other hand, only the gNB may perform full-duplex operation, and the UE may perform half-duplex operation. The gNB may transmit/receive DL and UL at the same time using the same or different frequency resources in the same time resource, but the UE performs only DL reception or UL transmission in a specific time resource. In this case, the gNB performs full duplex operation by performing DL transmission and UL reception with different UEs at the same time.

In the following, the proposal of the present disclosure will be described in more detail.

The following drawings are made to explain a specific example of the present specification. Since the names of specific devices or names of specific signals/messages/fields described in the drawings are provided as examples, the technical features of the present specification are not limited to the specific names used in the drawings below. In addition, the methods/configurations proposed in this specification may be combined in various ways.

In LTE/LTE-A, the scrambling sequence applied to the PUSCH changes according to the slot/subframe index in which the PUSCH is transmitted, but in NR, the scrambling sequence applied to the PUSCH is not affected by the slot index. That is, if the values of $n_{RNTI}$ and $n_{ID}$ are the same, the same scrambling sequence is applied to PUSCHs transmitted in different slots.

When the PUSCH is repeatedly transmitted through a plurality of slots as in PUSCH repetition type A, the same $n_{RNTI}$ and $n_{ID}$ values are applied for a scrambling sequence between PUSCH repetitions transmitted in different slots. Therefore, the same scrambling sequence is applied between PUSCH repetitions.

During PUSCH repetition, in order to perform symbol/RE-level combining, the same coded bit should be transmitted between PUSCH repetitions. To this end, the same RV value should be applied between PUSCH repetitions so that the same coded bits are transmitted. In this case, when repeating the PUSCH, the same resource element (RE) resources are used by using the same scrambling sequence for the same coded bits. Such transmission may cause a problem of giving neighboring cells the same interference during the PUSCH repetition period.

Therefore, during PUSCH repetition, it is required to perform inter-cell interference randomization while performing symbol/RE-level combining, and this specification proposes a method for this.

The content of this specification is described from the viewpoint of transmission of PUSCH, but the content of this specification includes not only PUSCH but also transmission of other channels such as PUCCH, PDSCH, and PDCCH.

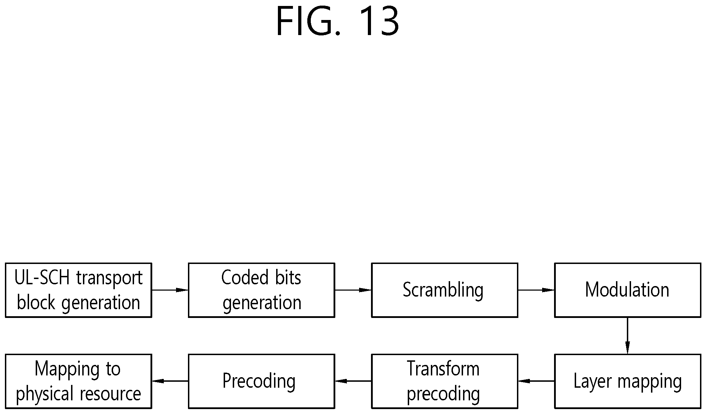

FIG. 13 shows an example of processing of a UL-SCH transport block. Specifically, FIG. 13 illustrates an example of a process from generation of a UL-SCH transport block, which is an information bit transmitted through a PUSCH, to mapping to a physical resource through which the PUSCH is transmitted.

The UE generates coded bits of the UL-SCH through a coded bit generation process using the UL-SCH transport block. The coded bit generation process may include, for example, transport block CRC attachment, code block segmentation and code block CRC attachment, channel coding, rate matching, code block concatenation, data and control multiplexing, and the like in the NR standard.

The coded bits of these UL-SCHs are mapped to physical resources through a process of scrambling, modulation, layer mapping, transform precoding, and precoding.

For conventional scrambling, the same scrambling sequence is applied to the slots where PUSCH repetitions are performed, which may not provide inter-cell interference randomization. In particular, when the same UL-SCH coded bits are transmitted for each slot in which PUSCH repetition is performed for symbol/RE-level combining, the inter-cell interference problem may be further increased. In order to solve this problem, an operation of differently applying scrambling according to time intervals while PUSCH repetition is performed is required.

To this end, a more specific method is proposed below. When performing repeated PUSCH transmissions, the methods described below may be selectively applied or all of them may be applied.

(Method A) Bit level scrambling

A scrambling sequence applied to coded bits transmitted through the PUSCH may be changed according to time units. To this end, a scrambling sequence applied to the PUSCH may be different for each slot or slot group in which the PUSCH is transmitted. Specifically, the value of $c_{init}$ for determining the scrambling sequence may be determined differently according to a slot index through which a PUSCH is transmitted or (slot index mod X).

For example, it is suggested that the scrambling sequence be changed as follows. When msg A is not transmitted on the PUSCH, the value of $c_{init}$ of the scrambling sequence of the PUSCH is currently determined as follows.

[Equation 1]

$$c_{init} = n_{RNTI} \cdot 2^{15} + n_{ID}$$

That is, the value of conventional $c_{init}$ is determined dependently on $n_{RNTI}$ and $n_{ID}$.

Currently, $n_{ID}$ consists of 10 bits, so currently values in the $[2^{10}, 2^{15}-1]$ range are not used as $c_{init}$. We propose to apply different scrambling sequences according to time units using these unused $c_{init}$ values.

For example, a generic pseudo-random sequence may be defined as a length-31 Gold sequence. An output sequence c(n) of length $M_{PN}$ can be defined as below equation. Here, n is 0, 1, ..., $M_{PN}-1$.

[Equation 2]

$$c(n) = \left(x_1(n+N_C) + x_2(n+N_C)\right)\bmod 2$$
$$x_1(n+31) = \left(x_1(n+3) + x_1(n)\right)\bmod 2$$
$$x_2(n+31) = \left(x_2(n+3) + x_2(n+2) + x_2(n+1) + x_2(n)\right)\bmod 2$$

Here, Nc=1600, and the first m-sequence $x_1(n)$ may start with $x_1(0)=1$, $x_1(n)=0$, n=0, 1, 2, ..., 30. The initialization of the second m-sequence $x_2(n)$ can be expressed as the following equation together with values according to the application of the sequence.

[Equation 3]

$$c_{\text{init}} = \sum_{i=0}^{30} x_2(i) \cdot 2^i$$

In Equation 3 above, the value of $c_{\text{ini}}$ can be determined dependently on $n_{\text{RNTI}}$, $n_{\text{ID}}$, and a new parameter (hereafter referred to as an index). New parameters can contribute to randomization.

For example, the value of $c_{\text{init}}$ can be defined as the following equation, and the index value can be applied differently depending on the time range. In this case, the index may have a value within the range of $[0, 2^5-1]$.

[Equation 4]

$$c_{\text{init}} = n_{\text{RNTI}} \cdot 2^{15} + index \cdot 2^{10} + n_{\text{ID}}$$

Here, $n_{\text{ID}}$ ($n_{\text{ID}} \in \{0, 1, ..., 1023\}$) may equal the higher-layer parameter dataScramblingIdentityPUSCH if configured and the RNTI equals the C-RNTI, MCS-C-RNTI, SP-CSI-RNTI or CS-RNTI, and the transmission is not scheduled using DCI format 0_0 in a common search space.

In addition, $n_{\text{ID}}$ may equal the higher-layer parameter msgA-dataScramblingIdentity if configured and the PUSCH transmission is triggered by a Type-2 random access procedure.

In other cases, $n_{\text{ID}} = N^{\text{cell}}_{\text{ID}}$.

In addition, the $n_{\text{RNTI}}$ may equal the RA-RNTI for msgA and otherwise corresponds to the RNTI associated with the PUSCH transmission.

Characteristically, the index value may mean at least one of the following.

(Alternative 1-1) The index value may mean a slot index, more specifically, a slot index within a frame. Considering the case where the slot index is greater than $2^5-1$, the value of the index may be equal to (slot index mod $2^5$).

(Alternative 1-2) The index value may mean floor (slot index/X). This is to make the scrambling sequence applied to the PUSCH different according to the slot group. More specifically, the slot index may mean a slot index within a frame. Considering the case where the slot index is greater than $2^5-1$, the value of the index may be equal to (floor(slot index/X) mod $2^5$).

(Alternative 1-3) The index value means the repetition number of the currently transmitted PUSCH. That is, when PUSCH repetitions are performed a total of N times, the index may mean n for the n-th (n is an integer less than or equal to N) PUSCH repetition.

More specifically, if a PUSCH transmission is performed using PUSCH repetition type A (i.e., slot-based repetition), the index in the PUSCH transmission at the nth slot can mean n for the entire N slots over which the PUSCH repetition is performed.

In addition, when PUSCH transmission is performed using PUSCH repetition type B (i.e., symbol-based repetition), the index at the nth nominal repetition means n for all N nominal repetitions in which PUSCH repetitions are performed. Alternatively, for all N' actual repetitions in which PUSCH repetitions are performed, the index at the n'th actual repetition may mean n'.

When the scrambling sequence is generated differently according to the slot index, scrambled bits are generated differently for each slot, and accordingly, modulated symbol values are generated differently. In this case, the receiver may not be able to receive the repetitively transmitted PUSCH by symbol/RE-level combining.

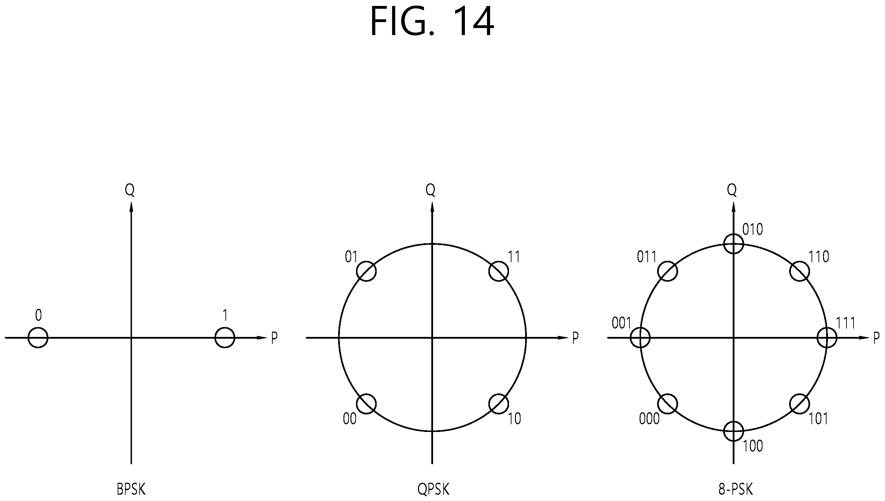

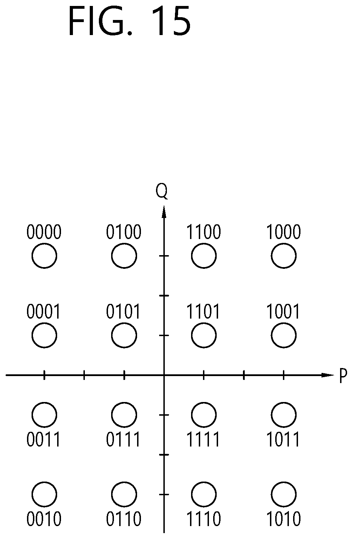

More specifically, when applying Quadrature Amplitude Modulation (QAM)-based modulation, such as 16 QAM, 64 QAM, etc., the receiver may not be able to perform combining between modulated symbols of different PUSCH repetitions because not only the phase of the modulated symbols but also their magnitude can be changed according to the scrambling sequence. However, when applying phase-shift keying (PSK)-based modulation such as BPSK, QPSK, 8-PSK, etc., only the phase of the modulated symbols changes even if the scrambling sequence varies, so the receiver can perform combining between modulated symbols of different PUSCH repetitions by appropriately changing the phase of the received modulated symbols according to the scrambling sequence. FIG. 14 shows an example of a constellation diagram of BPSK, QPSK, and 8-PSK. FIG. 15 shows an example of a constellation of 16 QAM.

Accordingly, this scrambling method can be limitedly applied when PSK-based modulation is used.

Alternatively, since it is effective to reduce the amount of information bits for coverage enhancement, it may be limited to apply only a PSK-based modulation when PUSCH repetition is performed. This may mean that when M bits constitute one modulated symbol, M is limited to a value of 8 or less.

(Method B) phase scrambling

When method A is applied, a modulated symbol value may vary according to a scrambling sequence. Accordingly, combining between repeatedly transmitted modulated symbols may not be performed, especially when QAM-based modulation is used. To solve this problem, the following phase scrambling method can be used.

(Method B-1) Modulated Symbol Level Phase Scrambling

In order to solve the problem of not being able to perform combining between modulated symbols when scrambling is applied differently for each PUSCH repetition, it is proposed to apply phase scrambling at the modulated symbol level. More specifically, modulated symbol level phase scrambling can mean the following.

Through the modulation process as shown in FIG. 13, using M*K bits b(0), b(1), b(2), ..., b(M*K-1), K modulated symbols d(0), d(1), d(2), ..., d(K-1) can be generated. At this time, one modulated symbol d(i) can be generated with M bits of b(M*i), b(M*i+1), b(M*i+2), ..., b(M*i+M-1).

For example, the modulation mapper receives binary digits 0 or 1, and can output/generate complex-valued modulation symbols according to a modulation mapping method as in at least one of methods 1) to 6) below.

Method 1) $\pi$/2-BPSK

In the case of the above modulation, bit b(i) may be mapped to a complex-valued modulation symbol d(i) according to the following equation.

[Equation 5]

$$d(i) = \frac{e^{j\frac{\pi}{2}(i \bmod 2)}}{\sqrt{2}}\left[(1 - 2b(i)) + j(1 - 2b(i))\right]$$

Method 2) BPSK

In the case of the above modulation, bit b(i) may be mapped to a complex-valued modulation symbol d(i) according to the following equation.

[Equation 6]

$$d(i) = \frac{1}{\sqrt{2}}\left[(1 - 2b(i)) + j(1 - 2b(i))\right]$$

Method 3) QPSK

In the case of the above modulation, the bit pair b(2i), b(2i+1) may be mapped to a complex-valued modulation symbol d(i) according to the following equation.

[Equation 7]

$$d(i) = \frac{1}{\sqrt{2}}\left[(1 - 2b(2i)) + j(1 - 2b(2i+1))\right]$$

Method 4) 16QAM

In the case of the modulation, the quadruplets of bits b(4i), b(4i+1), b(4i+2), and b(4i+3) may be mapped to a complex-valued modulation symbol d(i) according to the following equation.

[Equation 8]

$$d(i) = \frac{1}{\sqrt{10}}\left\{(1-2b(4i))\left[2-(1-2b(4i+2))\right] + j(1-2b(4i+1))\left[2-(1-2b(4i+3))\right]\right\}$$

Method 5) 64QAM

In the case of the modulation, six hextuplets of bits b(6i), b(6i+1), b(6i+2), b(6i+3), b(6i+4), b(6i+ 5) may be mapped to a complex-valued modulation symbol d(i) according to the following equation.

[Equation 9]

$$d(i) = \frac{1}{\sqrt{42}}\left\{(1-2b(6i))\left[4-(1-2b(6i+2))\left[2-(1-2b(6i+4))\right]\right] + j(1-2b(6i+1))\left[4-(1-2b(6i+3))\left[2-(1-2b(6i+5))\right]\right]\right\}$$

Method 6) 256QAM

In the case of the modulation, octuplets of bits b(8i), b(8i+1), b(8i+2), b(8i+3), b(8i+4), b(8i+5 ), b(8i+6), and b(8i+7) may be mapped to a complex-valued modulation symbol d(i) according to the following equation.

[Equation 10]

$$d(i) = \frac{1}{\sqrt{170}}\left\{(1-2b(8i))\left[8-(1-2b(8i+2))\left[4-(1-2b(8i+4))\left[2-(1-2b(8i+6))\right]\right]\right]\right.$$
$$\left. + j(1-2b(8i+1))\left[8-(1-2b(8i+3))\left[4-(1-2b(8i+5))\left[2-(1-2b(8i+7))\right]\right]\right]\right\}$$

In this case, a process of obtaining d'(i) = d(i)*s(i) by multiplying each modulated symbol d(i) by s(i) may be referred to as modulated symbol level scrambling. That is, the UE multiplies the modulated symbol d(i) by s(i) to obtain d'(i), and through this, the K symbols d'(0), d'(1), d'(2), ..., d'(K-1) can be used for layer mapping.

For example, the complex-valued modulation symbols $d^{(q)}(0)$, ..., $d^{(q)}(M^{(q)}_{symb}-1)$ for codeword q can be mapped to layer x(i) =$[x^{(0)}(i) ... x^{(\gamma-1)}(i)]^T$. Here, i = 0, 1, ..., $M^{layer}_{symb}-1$, $\gamma$ is the number of layers, and $M^{layer}_{symb}$ may be the number of modulation symbols per layer. Here, $d'^{(q)}(i)$ $(=d^{(q)}(i)*s(i))$ (i = 0, 1, ..., $M^{layer}_{symb}-1$) instead of $d^{(q)}(i)$ (i=0, ..., $M^{(q)}_{symb}-1$) ) may be used.

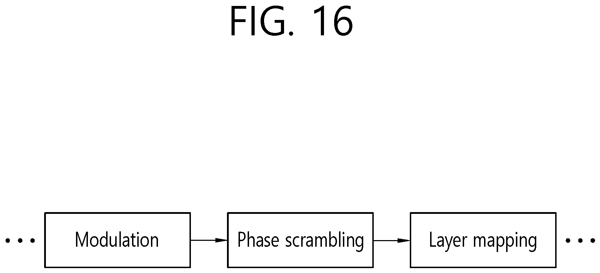

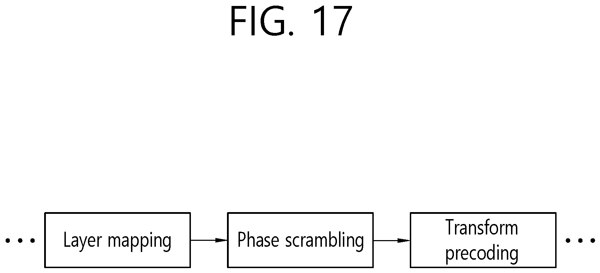

That is, in FIG. 13, a phase scrambling process may be added between modulation and layer mapping or between layer mapping and transform precoding. FIG. 16 shows an example in which a phase scrambling process is added between modulation and layer mapping processes. FIG. 17 illustrates an example in which a phase scrambling process is added between layer mapping and transform precoding.

Characteristically, the value of s(i) may be as follows.

For example, s(i) may have one of 1, -1, j, and -j. Characteristically, this method may be limited to a case in which modulation with a modulation order M of 2 or more is applied.

As another example, s(i) may have a value of 1 or -1. Characteristically, this method can be limited to the case of applying modulation with a modulation order M of 1.

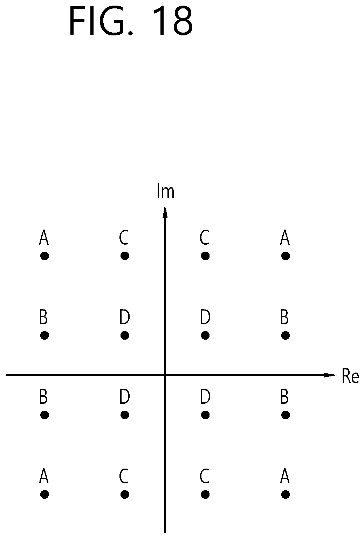

The above-described methods change only the phase of the modulation symbol, and are intended to be changed to one of values that can be generated through an existing modulation mapping process. FIG. 18 shows an example of 16 values of modulated symbols that can be mapped when 16QAM is applied. Here, when s(i) has a value of 1, -1, j, or j, when the modulated symbol d(i) has a specific value among 16 values in FIG. 18, d'(i) has one of the values indicated by the same alphabet as the value of d(i). For example, when d(i) has a value denoted by A, the value of d(i) has one of four values denoted by A. In this case, d'(i) has one value among four mapping values having the same magnitude as the value of d(i) and different phases according to the value of s(i). Therefore, even when QAM-based modulation is used, the receiver can perform combining between modulated symbols of different PUSCH repetitions by appropriately changing the phase of the received symbol.

(Method B-2) Phase scrambling after transform precoding

When performing DFT-s-OFDM based PUSCH transmission, the method of performing phase scrambling on the modulated symbols before the transform precoding, which is a DFT process, may not perform the operation of combining repeated symbols before performing equalization at the receiving end. For this operation, phase scrambling may be performed on symbols after transform precoding.

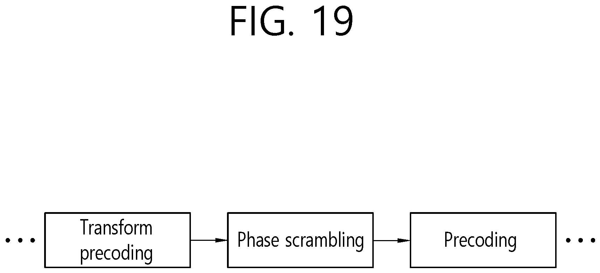

When complex-valued symbols $y^{(0)}(0)$, ..., $y^{(0)}(M^{layer}_{symb}-1)$ generated through the transform precoding process of NR exist, phase scrambling may be performed to obtain $y'^{(0)}(i) = y^{(0)}(i)*s(i)$. That is, the UE obtains $y'^{(0)}(i)$ by multiplying $y^{(0)}(i)$, which is the complex symbol after the transform precoding process, by $s(i)$, and $y'(0)$, $y'(1)$, $y'(2)$, ..., $y'(M^{layer}_{symb}-1)$ can be used for precoding. That is, a phase scrambling process may be added between transform precoding and precoding processes in FIG. 13. FIG. 19 illustrates an example in which a phase scrambling process is added between transform precoding and precoding processes.

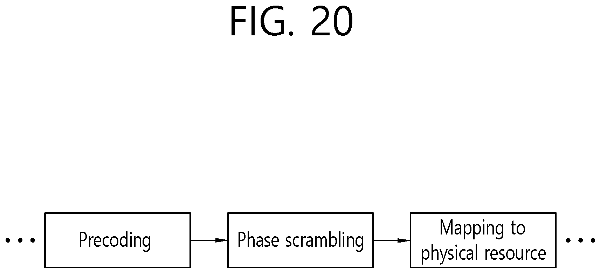

Or, when there is a block $z^{(p)}(0)$, ..., $z^{(p)}(M^{ap}_{symb}-1)$ of complex symbols after the NR precoding process, phase scrambling may be performed to obtain $z'^{(0)}(i) = z^{(0)}(i)*s(i)$. That is, the UE obtains $z'^{(0)}(i)$ by multiplying $z^{(0)}(i)$, which is the complex symbol after the precoding process, by $s(i)$, and these $z'(0)$, $z'(1)$, $z'(2)$, ..., $z'(M^{ap}_{symb}-1)$ may be used in a mapping to virtual resource block process. That is, in FIG. 13, a phase scrambling process may be added between the precoding and virtual resource block mapping processes. FIG. 20 illustrates an example in which a phase scrambling process is added between precoding and virtual resource block mapping processes.

In order to combine repeated symbols before performing equalization at the receiving end, scrambling should be performed so that only the phase of complex symbols is changed. That is, $s(i)$ may have a value that changes only the phase of the modulated symbol.

Characteristically, the value of $s(i)$ within a PUSCH transmission or within a slot may be determined as follows.

(Alternative 2-1) $s(i)$ may have a different value depending on i. That is, $s(i)$ having a different value for each complex symbol may be multiplied. This may mean that $s(i)$ having a different value is multiplied for each RE position where the complex symbol is transmitted.

(Alternative 2-2) $s(i)$ may have a different value depending on the OFDM symbol position in which the PUSCH is transmitted. That is, $s(i)$ may have the same value in the same OFDM symbol position. That is, when the number of subcarriers through which PUSCH is transmitted in one OFDM symbol is $N^{PUSCH}_{sc}$, $s(i)$ may have a different value depending on $j=floor(i/ N^{PUSCH}_{sc})$.

(Alternative 3-3) $s(i)$ may have the same value within a slot in which a PUSCH is transmitted or within one PUSCH transmission. That is, within a slot or for one PUSCH transmission, $s(i)$ may have the same value for all i.

Characteristically, $s(i)$ may have the following values.

For example, $s(i)$ may have one of 1, -1, j, and -j. Characteristically, this can be applied to a method in which a PAPR issue does not occur by applying the same phase scrambling value in the same OFDM symbol or same slot among the above methods.

As another example, $s(i)$ may have a value of a Zadoff-Chu (ZC) sequence. That is, $s(0)$, $s(i)$, ..., $s(M-1)$ may have the form of a ZC sequence. This may be applied to prevent a problem of increasing PAPR due to phase scrambling within the same OFDM symbol. Therefore, this can be applied to, among the methods described above, a method in which different phase scrambling values can be applied for each RE even in the same OFDM symbol.

Additionally, $s(i)$ may have different values over time as follows.

(Alternative a) $s(i)$ may have a different value according to a slot index through which PUSCH is transmitted or a value of floor(slot index/X). That is, for the same value of i, the value of $s(i)$ may have a different value according to the slot index in which the PUSCH is transmitted or floor (slot index/X).

(Alternative b) $s(i)$ may have a different value according to the repetition number of the currently transmitted PUSCH. That is, when performing all N PUSCH repetitions, $s(i)$ may be determined differently for each PUSCH repetition. When PUSCH transmission is performed using PUSCH repetition type B (i.e., symbol-based repetition), $s(i)$ may have a different value according to nominal PUSCH repetitions or actual PUSCH repetitions.

This phase scrambling can be applied independently of scrambling performed on existing coded bits. Alternatively, when phase scrambling is applied, scrambling performed on the existing coded bits may not be performed.

Characteristically, such phase scrambling can be limitedly applied when QAM-based modulation is used or when the modulation order is 16 or more.

Characteristically, when PSK-based modulation is applied (or when the modulation order M is 8 or less), method A is applied, and when QAM-based modulation is applied (or when the modulation order M is greater than 8), method B may be applied.

Hereinafter, when the bit-level scrambling and/or the phase scrambling are applied to PUSCH repetition, the UE can determine whether bit-level scrambling and/or phase scrambling are applied through the following method.

(Method 1) It may be indicated that bit level scrambling or phase scrambling is applied for PUSCH transmission through higher layer signaling or DCI indication.

(Method 2) When PUSCH transmission time resources are configured to perform PUSCH repetitions, including time resources (e.g., slots) for performing full duplex (SS-FD, SB-FD) operations, the UE may determine that bit-level scrambling or phase scrambling is applied for transmission of the PUSCH.

(Method 3) When a full duplex (SS-FD, SB-FD) operation is performed in a serving cell transmitting a PUSCH using PUSCH repetition, or, if time resources (e.g., slots) to perform full duplex (SS-FD, SB-FD) operation is included, the UE may determine that bit-level scrambling or phase scrambling is applied for transmission of the PUSCH.

If application of the bit level scrambling or phase scrambling method is set through the above method, the UE may perform PUSCH repetition by applying the corresponding scrambling scheme, and otherwise may perform PUSCH repetition by applying the conventional scrambling scheme.

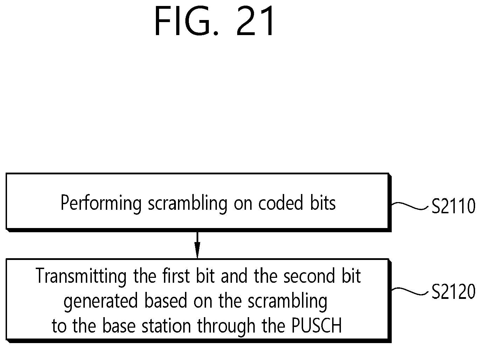

FIG. 21 is a flowchart of an example of a method for performing repeated PUSCH transmissions by a UE according to some implementations of the present specification.

Referring to FIG. 21, the UE performs scrambling on coded bits (S2110). Here, the scrambling may include scrambling based on Method A and Method B described above. In addition, the coded bits may be generated by the UE performing channel coding on the transport block.

The UE transmits the first bit and the second bit generated based on the scrambling to the base station through the PUSCH (S2120). Here, the first bit is transmitted through a first time resource, and the second bit is transmitted through a second time resource.

Here, the first bit and the second bit may be generated by performing scrambling independently on the coded bit. That is, the first bit and the second bit may be generated by independently performing scrambling on the same transport block. For example, the first bit may be generated based on a first scrambling sequence, and the second bit may be generated based on a second scrambling sequence. In this case, the first scrambling sequence may be generated based on the index of the first time resource, and the second scrambling sequence may be generated based on the index of the second time resource.

Alternatively, the UE may generate a scrambled bit based on the scrambling and perform phase scrambling on the scrambled bit to generate a first bit and a second bit. That is, the phase of the first bit may be different from the phase of the second bit.

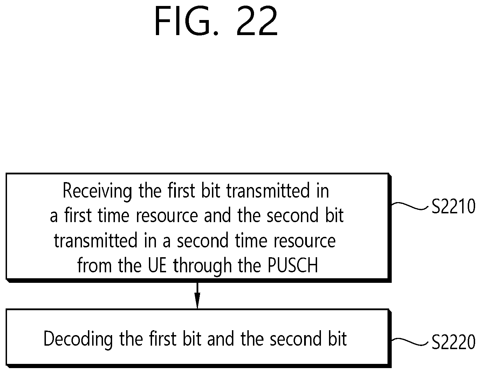

FIG. 22 is a flowchart of an example of a method of repeatedly receiving a PUSCH by a base station according to some implementations of the present specification.

Referring to FIG. 22, the base station receives the first bit transmitted in a first time resource and the second bit transmitted in a second time resource from the UE through the PUSCH (S2210).

Then, the base station decodes the first bit and the second bit (S2220).

Here, the first bit and the second bit may be generated by performing scrambling independently on the coded bit. That is, the first bit and the second bit may be generated by independently performing scrambling on the same transport block. For example, the first bit may be generated based on a first scrambling sequence, and the second bit may be generated based on a second scrambling sequence. In this case, the first scrambling sequence may be generated based on the index of the first time resource, and the second scrambling sequence may be generated based on the index of the second time resource.

Alternatively, the UE may generate a scrambled bit based on the scrambling and perform phase scrambling on the scrambled bit to generate a first bit and a second bit. That is, the phase of the first bit may be different from the phase of the second bit.

The methods proposed in this specification can be performed not only by a UE, but also by at least one computer readable medium containing instructions based on being executed by at least one processor and a device (apparatus) set to control a UE and including one or more processors and one or more memories operably connected by the one or more processors and storing instructions, wherein the one or more processors execute the instructions to perform the methods proposed herein. In addition, according to the methods proposed in this specification, it is obvious that an operation by a base station corresponding to an operation performed by a UE can be considered.

Hereinafter, an example of a communication system to which the present disclosure is applied will be described.

Although not limited thereto, the various descriptions, functions, procedures, proposals, methods, and/or operation flowcharts of the present disclosure disclosed in this document may be applied to various fields requiring wireless communication/connection (e.g., 5G) between devices.

Hereinafter, it will be exemplified in more detail with reference to the drawings. In the following drawings/descriptions, the same reference numerals may represent the same or corresponding hardware blocks, software blocks, or functional blocks, unless otherwise indicated.

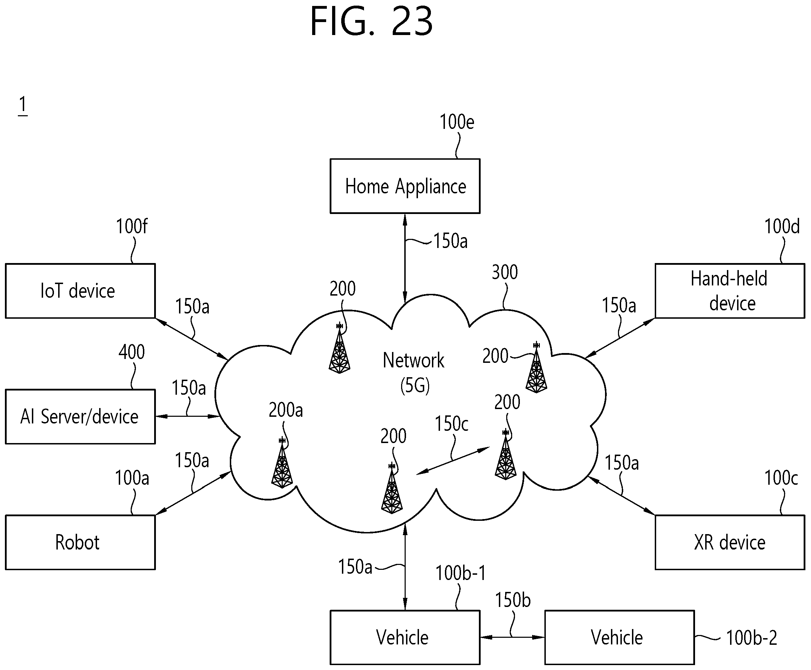

FIG. 23 illustrates a communication system 1 applied to the present disclosure.

Referring to FIG. 23, the communication system 1 applied to the present disclosure includes a wireless device, a base station, and a network. Here, the wireless device refers to a device that performs communication using a wireless access technology (e.g., 5G NR (New RAT), LTE (Long Term Evolution)), and may be referred to as a communication/wireless/5G device. Although not limited thereto, the wireless device may include a robot 100a, a vehicle 100b-1, 100b-2, an extended Reality (XR) device 100c, a hand-held device 100d, and a home appliance 100e. ), an Internet of Things (IoT) device 100f, and an AI device/server 400. For example, the vehicle may include a vehicle equipped with a wireless communication function, an autonomous driving vehicle, a vehicle capable of performing inter-vehicle communication, and the like. Here, the vehicle may include an Unmanned Aerial Vehicle (UAV) (e.g., a drone). XR devices include AR (Augmented Reality)/VR (Virtual Reality)/MR (Mixed Reality) devices, and it may be implemented in the form of a Head-Mounted Device (HMD), a Head-Up Display (HUD) provided in a vehicle, a television, a smartphone, a computer, a wearable device, a home appliance, a digital signage, a vehicle, a robot, and the like. The portable device may include a smart phone, a smart pad, a wearable device (e.g., a smart watch, smart glasses), a computer (e.g., a laptop computer), and the like. Home appliances may include a TV, a refrigerator, a washing machine, and the like. The IoT device may include a sensor, a smart meter, and the like. For example, the base station and the network may be implemented as a wireless device, and a specific wireless device 200a may operate as a base station/network node to other wireless devices.

Here, the wireless communication technology implemented in the wireless device of the present specification may include Narrowband Internet of Things for low power communication as well as LTE, NR, and 6G. For example, NB-IoT technology may be an example of Low Power Wide Area Network (LPWAN) technology, and may be implemented in standards such as LTE Cat NB1 and/or LTE Cat NB2, without limitation. Additionally or alternatively, the wireless communication technology implemented in the wireless devices of this disclosure may perform communications based on LTE-M technology. In one example, LTE-M technology may be an example of LPWAN technology and may be referred to by various names, such as enhanced Machine Type Communication (eMTC). For example, LTE-M technology may be implemented in at least one of various specifications, such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the above designations. Additionally or alternatively, the wireless communication technologies implemented in the wireless devices of this disclosure may include at least one of ZigBee, Bluetooth, and Low Power Wide Area Network (LPWAN), which contemplate low power communication, and are not limited to the designations described above. For example, ZigBee technology can create personal area networks (PANs) for small, low-power digital communications based on various specifications, such as IEEE 802.15.4, and may be referred to by various names.

The wireless devices 100a-100f may be connected to the network 300 via the base station 200. The wireless devices 100a-100f may be equipped with artificial intelligence (AI) technology, and the wireless devices 100a-100f may be connected to an AI server 400 via the network 300. The network 300 may be organized using a 3G network, a 4G (e.g., LTE) network, or a 5G (e.g., NR) network, or the like. The wireless devices 100a-100f may communicate with each other via the base station 200/network 300, but may also communicate directly (e.g., sidelink communication) without going through the base station/network. For example, vehicles 100b-1, 100b-2 may communicate directly (e.g., vehicle to vehicle (V2V)/vehicle to everything (V2X) communication). In addition, IoT devices (e.g., sensors) may communicate directly with other IoT devices (e.g., sensors) or other wireless devices 100a-100f.

Wireless communications/connections 150a, 150b, 150c may be established between wireless devices 100a-100f, base station 200, and base station 200. The wireless communications/connections may be accomplished via various wireless access technologies (e.g., 5G NR), such as uplink/downlink communications 150a, sidelink communications 150b (or, D2D communications), and base station-to-base station communications 150c (e.g., relay, integrated access backhaul (IAB)). The wireless communications/connections 150a, 150b, 150c may enable the wireless device and the base station/the wireless device, and the base station and the wireless device to transmit/receive wireless signals to each other. For example, the wireless communications/connections 150a, 150b, 150c may transmit/receive signals via various physical channels. To this end, based on various proposals of this disclosure, at least some of the following may be performed: various configuration information setting processes for transmitting/receiving wireless signals, various signal processing processes (e.g., channel encoding/decoding, modulation/demodulation, resource mapping/demapping, etc.), resource allocation processes, etc.

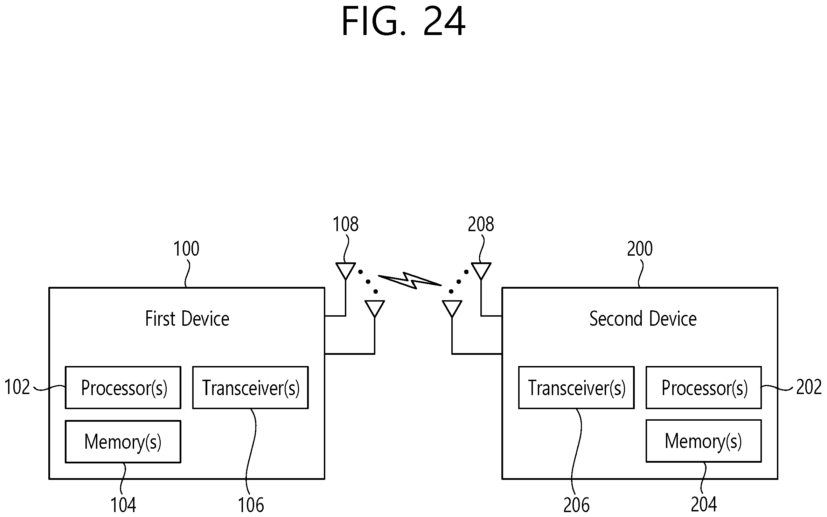

FIG. 24 illustrates a wireless device applicable to the present disclosure.

Referring to FIG. 24, the first wireless device 100 and the second wireless device 200 may transmit and receive wireless signals through various wireless access technologies (e.g., LTE, NR). Here, {first wireless device 100, second wireless device 200} may correspond to {wireless device 100x, base station 200} and/or {wireless device 100x, wireless device 100x} of FIG. 23.

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processor 102 and

may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present disclosure, the wireless device may represent a communication modem/circuit/chip.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 106 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

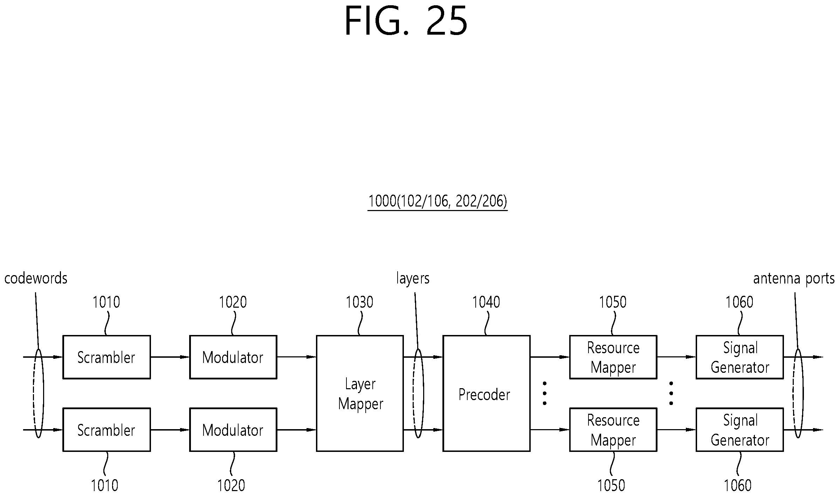

FIG. 25 exemplifies a signal processing circuit for a transmission signal.

Referring to FIG. 25, a signal processing circuit 1000 includes a scrambler 1010, a modulator 1020, a layer mapper 1030, a precoder 1040, a resource mapper 1050, and a signal generator 1060. The operations/functions of FIG. 25 may be performed in the processors 102 and 202 and/or the transceivers 106 and 206 of FIG. 24 but are not limited thereto. The hardware elements of FIG. 25 may be implemented in the processors 102 and 202 and/or the transceivers 106 and 206 of FIG. 24. For example, blocks 1010 to 1060 may be implemented in the processors 102 and 202 of FIG. 24. In addition, blocks 1010 to 1050 may be implemented in the processors 102 and 202 of FIG. 24, and block 1060 may be implemented in the transceivers 106 and 206 of FIG. 24.

A codeword may be converted into a wireless signal through the signal processing circuit 1000 of FIG. 25. Here, the codeword is an encoded bit sequence of an information block. The information block may include a transport block (e.g., a UL-SCH transport block or a DL-SCH transport block). The wireless signal may be transmitted through various physical channels (e.g., PUSCH or PDSCH).

Specifically, the codeword may be converted into a scrambled bit sequence by the scrambler 1010. The scramble sequence used for scrambling is generated based on an initialization value, and the initialization value may include ID information of a wireless device. The scrambled bit sequence may be modulated by the modulator 1020 into a modulation symbol sequence. The modulation scheme may include pi/2-binary phase shift keying (pi/2-BPSK), m-phase shift keying (m-PSK), m-quadrature amplitude modulation (m-QAM), and the like. The complex modulation symbol sequence may be mapped to one or more transport layers by the layer mapper 1030. The modulation symbols of each transport layer may be mapped to the corresponding antenna port(s) by the precoder 1040 (precoding). An output z of the precoder 1040 may be obtained by multiplying an output y of the layer mapper 1030 by an N*M precoding matrix W. Here, N is the number of antenna ports and M is the number of transmission layers. Here, the precoder 1040 may perform precoding after performing transform precoding (e.g., DFT transform) on complex modulation symbols. Also, the precoder 1040 may perform precoding without performing transform precoding.

The resource mapper 1050 may map modulation symbols of each antenna port to a time-frequency resource. The time-frequency resource may include a plurality of symbols (e.g., CP-OFDMA symbols or DFT-s-OFDMA symbols) in a time domain and may include a plurality of subcarriers in a frequency domain. The signal generator 1060 may generate a wireless signal from the mapped modulation symbols, and the generated wireless signal may be transmitted to another device through each antenna. To this end, the signal generator 1060 may include an inverse fast Fourier transform (IFFT) module, a cyclic prefix (CP) inserter, a digital-to-analog converter (DAC), a frequency uplink converter, and the like.

A signal processing process for a received signal in the wireless device may be configured as the reverse of the signal processing process (1010 to 1060) of FIG. 25. For example, a wireless device (e.g., 100 or 200 in FIG. 24) may receive a wireless signal from the outside through an antenna port/transmitter. The received wireless signal may be converted into a baseband signal through a signal restorer. To this end, the signal restorer may include a frequency downlink converter, an analog-to-digital converter (ADC), a CP canceller, and a fast Fourier transform (FFT) module. Thereafter, the baseband signal may be restored into a codeword through a resource de-mapper process, a postcoding process, a demodulation process, and a de-scramble process. The codeword may be restored to an original information block through decoding. Accordingly, a signal processing circuit (not shown) for a received signal may include a signal restorer, a resource demapper, a postcoder, a demodulator, a descrambler, and a decoder.

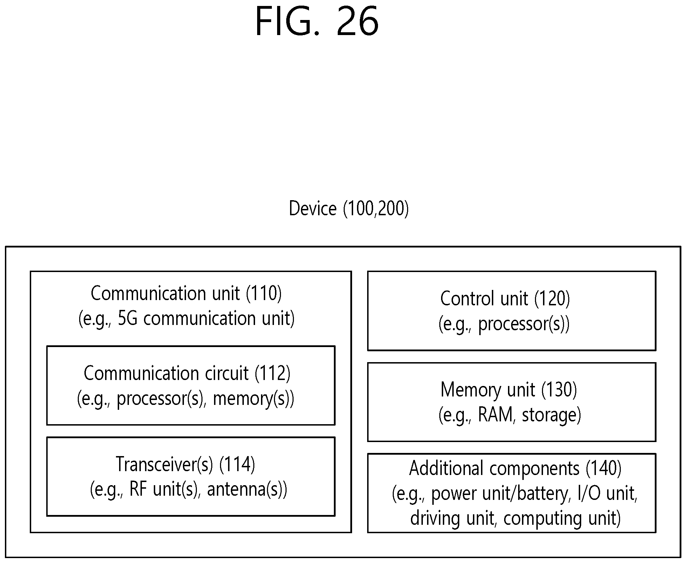

FIG. 26 shows another example of a wireless device applied to the present disclosure. The wireless device can be implemented in various forms according to use-examples/services.

Referring to FIG. 26, wireless devices (100, 200) may correspond to the wireless devices (100, 200) of FIG. 24 and may be configured by various elements, components, units/portions, and/or modules. For example, each of the wireless devices (100, 200) may include a communication unit (110), a control unit (120), a memory unit (130), and additional components (140). The communication unit may include a communication circuit (112) and transceiver(s) (114). For example, the communication circuit (112) may include the one or more processors (102, 202) and/or the one or more memories (104, 204) of FIG. 24. For example, the transceiver(s) (114) may include the one or more transceivers (106, 206) and/or the one or more antennas (108, 208) of FIG. 24. The control unit (120) is electrically connected to the communication unit (110), the memory (130), and the additional components (140) and controls overall operation of the wireless devices. For example, the control unit (120) may control an electric/mechanical operation of the wireless device based on programs/code/instructions/information stored in the memory unit (130). The control unit (120) may transmit the information stored in the memory unit (130) to the exterior (e.g., other communication devices) via the communication unit (110) through a wireless/wired interface or store, in the memory unit (130), information received through the wireless/wired interface from the exterior (e.g., other communication devices) via the communication unit (110).

The additional components (140) may be variously configured according to types of wireless devices. For example, the additional components (140) may include at least one of a power unit/battery, input/output (I/O) unit, a driving unit, and a computing unit. The wireless device may be implemented in the form of, without being limited to, the robot (100a of FIG. 23), the vehicles (100b-1, 100b-2 of FIG. 23), the XR device (100c of FIG. 23), the hand-held device (100d of FIG. 23), the home appliance (100e of FIG. 23), the IoT device (100f of FIG. 23), a digital broadcast UE, a hologram device, a public safety device, an MTC device, a medicine device, a fintech device (or a finance device), a security device, a climate/environment device, the AI server/device (400 of FIG. 23), the BSs (200 of FIG. 23), a network node, and so on. The wireless device may be used in a mobile or fixed place according to a usage-example/service.

In FIG. 26, the entirety of the various elements, components, units/portions, and/or modules in the wireless devices (100, 200) may be connected to each other through a wired interface or at least a part thereof may be wirelessly connected through the communication unit (110). For example, in each of the wireless devices (100, 200), the control unit (120) and the communication unit (110) may be connected by wire and the control unit (120) and first units (e.g., 130, 140) may be wirelessly connected through the communication unit (110). Each element, component, unit/portion, and/or module within the wireless devices (100, 200) may further include one or more elements. For example, the control unit (120) may be configured by a set of one or more processors. As an example, the control unit (120) may be configured by a set of a communication control processor, an application processor, an Electronic Control Unit (ECU), a graphical processing unit, and a memory control processor. As another example, the memory (130) may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 26 will be described in detail with reference to the drawings.

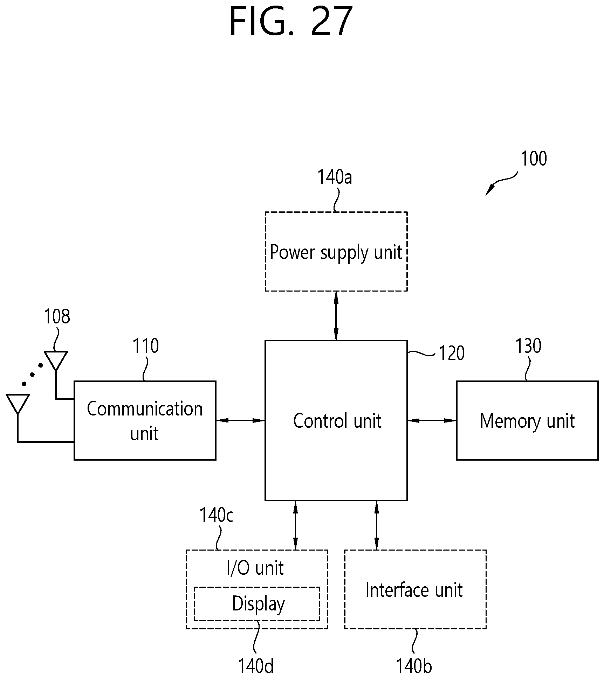

FIG. 27 illustrates a portable device applied to the present disclosure. The portable device may include a smartphone, a smart pad, a wearable device (e.g., smart watch or smart glasses), a portable computer (e.g., a notebook), etc. The portable device may be referred to as a mobile station (MS), a user terminal (UT), a mobile subscriber station (MSS), a subscriber station (SS), an advanced mobile station (AMS), or a wireless terminal (WT).

Referring to FIG. 27, the portable device 100 may include an antenna unit 108, a communication unit 110, a controller 120, a memory unit 130, a power supply unit 140a, an interface unit 140b, and input/output unit 140c. The antenna unit 108 may be configured as a part of the communication unit 110. Blocks 110 to 130/140a to 140c correspond to blocks 110 to 130/140 of FIG. 26, respectively.

The communication unit 110 may transmit and receive signals (e.g., data, control signals, etc.) with other wireless devices and BSs. The controller 120 may perform various operations by controlling components of the portable device 100. The controller 120 may include an application processor (AP). The memory unit 130 may store data/parameters/programs/codes/commands required for driving the portable device 100. Also, the memory unit 130 may store input/output data/information, and the like. The power supply unit 140a supplies power to the portable device 100 and may include a wired/wireless charging circuit, a battery, and the like. The interface unit 140b may support connection between the portable device 100 and other external devices. The interface unit 140b may include various ports (e.g., audio input/output ports or video input/output ports) for connection with external devices. The input/output unit 140c may receive or output image information/signal, audio information/signal, data, and/or information input from a user. The input/output unit 140c may include a camera, a microphone, a user input unit, a display unit 140d, a speaker, and/or a haptic module.

For example, in the case of data communication, the input/output unit 140c acquires information/signals (e.g., touch, text, voice, image, or video) input from the user, and the acquired information/signals may be stored in the memory unit 130. The communication unit 110 may convert information/signals stored in the memory into wireless signals and may directly transmit the converted wireless signals to other wireless devices or to a BS. In addition, after receiving a wireless signal from another wireless device or a BS, the communication unit 110 may restore the received wireless signal to the original information/signal. The restored information/signal may be stored in the memory unit 130 and then output in various forms (e.g., text, voice, image, video, or haptic) through the input/output unit 140c.

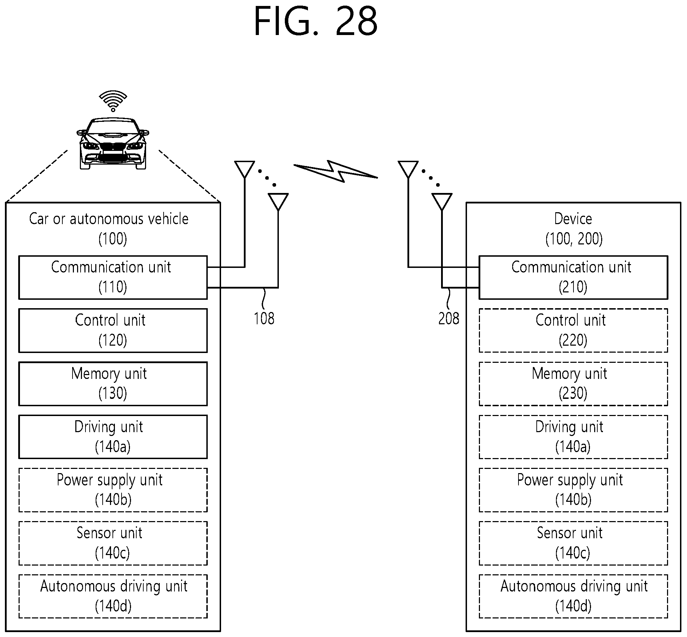

FIG. 28 illustrates a vehicle or an autonomous vehicle applied to the present disclosure. A vehicle or an autonomous vehicle may be implemented as a moving robot, a vehicle, a train, a manned/unmanned aerial vehicle (AV), a ship, or the like.

Referring to FIG. 28, a vehicle or autonomous vehicle 100 includes an antenna unit 108, a communication unit 110, a control unit 120, a driving unit 140a, a power supply unit 140b, and a sensor unit 140c, and an autonomous driving unit 140d. The antenna unit 108 may be configured as a portion of the communication unit 110. Blocks 110/130/140a to 140d correspond to blocks 110/130/140 of FIG. 26, respectively.

The communication unit 110 may transmit and receive signals (e.g., data, control signals, etc.) with external devices such as other vehicles, base stations (BSs) (e.g. base station, roadside unit, etc.), and servers. The control unit 120 may perform various operations by controlling elements of the vehicle or the autonomous vehicle 100. The control unit 120 may include an electronic control unit (ECU). The driving unit 140a may cause the vehicle or the autonomous vehicle 100 to travel on the ground. The driving unit 140a may include an engine, a motor, a power train, a wheel, a brake, a steering device, and the like. The power supply unit 140b supplies power to the vehicle or the autonomous vehicle 100, and may include a wired/wireless charging circuit, a battery, and the like. The sensor unit 140c may obtain vehicle status, surrounding environment information, user information, and the like. The sensor unit 140c may include an inertial measurement unit (IMU) sensor, a collision sensor, a wheel sensor, a speed sensor, an inclination sensor, a weight detection sensor, a heading sensor, a position module, a vehicle forward/reverse sensor, a battery sensor, a fuel sensor, a tire sensor, a steering sensor, a temperature sensor, a humidity sensor, an ultrasonic sensor, an illuminance sensor, a pedal position sensor, etc. The autonomous driving unit 140d may implement a technology of maintaining a driving lane, a technology of automatically adjusting a speed such as adaptive cruise control, a technology of automatically traveling along a predetermined route, and a technology of automatically setting a route and traveling when a destination is set.

For example, the communication unit 110 may receive map data, traffic information data, and the like from an external server. The autonomous driving unit 140d may generate an autonomous driving route and a driving plan based on the acquired data. The control unit 120 may control the driving unit 140a so that the vehicle or the autonomous vehicle 100 moves along the autonomous driving route according to the driving plan (e.g., speed/direction adjustment). During autonomous driving, the communication unit 110 may asynchronously/periodically acquire the latest traffic information data from an external server and may acquire surrounding traffic information data from surrounding vehicles. In addition, during autonomous driving, the sensor unit 140c may acquire vehicle state and surrounding environment information. The autonomous driving unit 140d may update the autonomous driving route and the driving plan based on newly acquired data/information. The communication unit 110 may transmit information on a vehicle location, an autonomous driving route, a driving plan, and the like to the external server. The external server may predict traffic information data in advance using AI technology or the like based on information collected from the vehicle or autonomous vehicles and may provide the predicted traffic information data to the vehicle or autonomous vehicles.

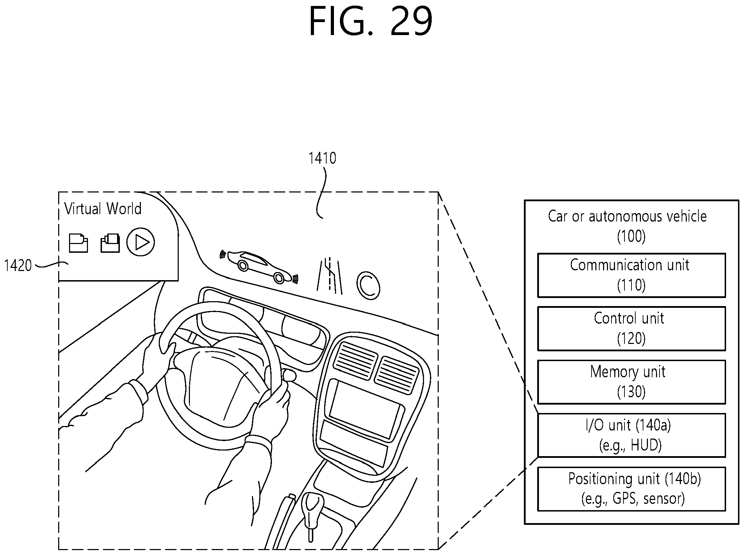

FIG. 29 illustrates a vehicle applied to the present disclosure. Vehicles may also be implemented as means of transportation, trains, aircraft, and ships.

Referring to FIG. 29, the vehicle 100 may include a communication unit 110, a control unit 120, a memory unit 130, an input/output unit 140a, and a position measurement unit 140b. Here, blocks 110 to 130/140a to 140d correspond to blocks 110 to 130/140 of FIG. 26, respectively.

The communication unit 110 may transmit and receive signals (e.g., data, control signals, etc.) with other vehicles or external devices such as a BS. The control unit 120 may perform various operations by controlling components of the vehicle 100. The memory unit 130 may store data/parameters/programs/codes/commands supporting various functions of the vehicle 100. The input/output unit 140a may output an AR/VR object based on information in the memory unit 130. The input/output unit 140a may include a HUD. The location measurement unit 140b may acquire location information of the vehicle 100. The location information may include absolute location information of the vehicle 100, location information within a driving line, acceleration information, location information with surrounding vehicles, and the like. The location measurement unit 140b may include a GPS and various sensors.

For example, the communication unit 110 of the vehicle 100 may receive map information, traffic information, etc., from an external server and store the information in the memory unit 130. The location measurement unit 140b may acquire vehicle location information through GPS and various sensors and store the vehicle location information in the memory unit 130. The control unit 120 may generate a virtual object based the on map information, the traffic information, the vehicle location information, and the like, and the input/output unit 140a may display the generated virtual object on a window of the vehicle (1410, 1420). In addition, the control unit 120 may determine whether the vehicle 100 is operating normally within a driving line based on vehicle location information. When the vehicle 100 deviates from the driving line abnormally, the control unit 120 may display a warning on a windshield of the vehicle through the input/output unit 140a. In addition, the control unit 120 may broadcast a warning message regarding a driving abnormality to nearby vehicles through the communication unit 110. Depending on a situation, the control unit 120 may transmit location information of the vehicle and information on driving/vehicle abnormalities to related organizations through the communication unit 110.

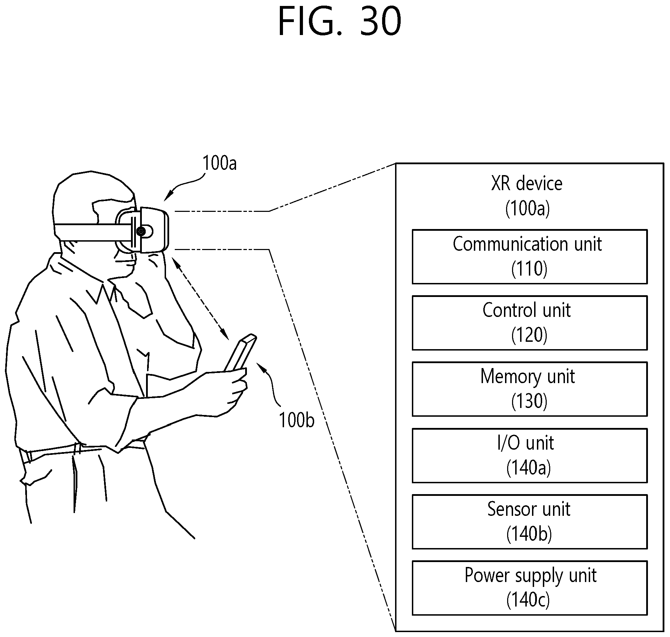

FIG. 30 illustrates an XR device applied to the present disclosure. The XR device may be implemented as an HMD, a head-up display (HUD) provided in a vehicle, a television, a smartphone, a computer, a wearable device, a home appliance, a digital signage, a vehicle, a robot, and the like.

Referring to FIG. 30, the XR device 100a may include a communication unit 110, a control unit 120, a memory unit 130, an input/output unit 140a, a sensor unit 140b, and a power supply unit 140c. Here, blocks 110 to 130/140a to 140c correspond to blocks 110 to 130/140 of FIG. 26, respectively.

The communication unit 110 may transmit and receive signals (e.g., media data, control signals, etc.) with external devices such as other wireless devices, portable devices, media servers. Media data may include images, sounds, and the like. The control unit 120 may perform various operations by controlling components of the XR device 100a. For example, the control unit 120 may be configured to control and/or perform procedures such as video/image acquisition, (video/image) encoding, and metadata generating and processing. The memory unit 130 may store data/parameters/programs/codes/commands required for driving the XR device 100a/generating an XR object. The input/output unit 140a may obtain control information, data, etc. from the outside and may output the generated XR object. The input/output unit 140a may include a camera, a microphone, a user input unit, a display unit, a speaker, and/or a haptic module. The sensor unit 140b may obtain XR device status, surrounding environment information, user information, and the like. The sensor unit 140b may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, and/or a radar. The power supply unit 140c may supply power to the XR device 100a and may include a wired/wireless charging circuit, a battery, and the like.

As an example, the memory unit 130 of the XR device 100a may include information (e.g., data, etc.) necessary for generating an XR object (e.g., AR/VR/MR object). The input/output unit 140a may acquire a command to manipulate the XR device 100a from a user, and the control unit 120 may drive the XR device 100a according to the user's driving command. For example, when the user tries to watch a movie, news, etc., through the XR device 100a, the control unit 120 may transmit content request information through the communication unit 130 to another device (for example, the portable device 100b) or to a media server. The communication unit 130 may download/stream content such as movies and news from another device (e.g., the portable device 100b) or the media server to the memory unit 130. The control unit 120 may control and/or perform procedures such as video/image acquisition, (video/image) encoding, and metadata generating/processing for the content, and generate/output an XR object based on information on a surrounding space or a real object through the input/output unit 140a/sensor unit 140b.

In addition, the XR device 100a may be wirelessly connected to the portable device 100b through the communication unit 110, and an operation of the XR device 100a may be controlled by the portable device 100b. For example, the portable device 100b may operate as a controller for the XR device 100a. To this end, the XR device 100a may acquire 3D location information of the portable device 100b, generate an XR entity corresponding to the portable device 100b, and output the generated XR entity.

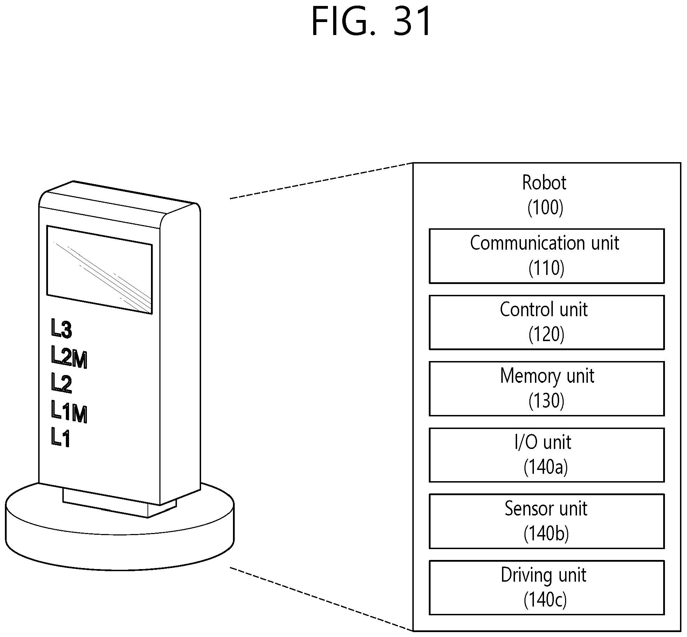

FIG. 31 illustrates a robot applied to the present disclosure. Robots may be classified as industrial, medical, household, military, etc. depending on the purpose or field of use.

Referring to FIG. 31, a robot 100 may include a communication unit 110, a control unit 120, a memory unit 130, an input/output unit 140a, a sensor unit 140b, and a driving unit 140c. Here, blocks 110 to 130/140a to 140d correspond to blocks 110 to 130/140 of FIG. 26, respectively.

The communication unit 110 may transmit and receive signals (e.g., driving information, control signals, etc.) with other wireless devices, other robots, or external devices such as a control server. The control unit 120 may perform various operations by controlling components of the robot 100. The memory unit 130 may store data/parameters/programs/codes/commands supporting various functions of the robot 100. The input/output unit 140a may acquire information from the outside of the robot 100 and may output the information to the outside of the robot 100. The input/output unit 140a may include a camera, a microphone, a user input unit, a display unit, a speaker, and/or a haptic module. The sensor unit 140b may obtain internal information, surrounding environment information, user information, and the like of the robot 100. The sensor unit 140b may include a proximity sensor, an illuminance sensor, an acceleration sensor, a magnetic sensor, a gyro sensor, an inertial sensor, an IR sensor, a fingerprint recognition sensor, an ultrasonic sensor, an optical sensor, a microphone, a radar, and the like. The driving unit 140c may perform various physical operations such as moving a robot joint. In addition, the driving unit 140c may cause the robot 100 to travel on the ground or fly in the air. The driving unit 140c may include an actuator, a motor, a wheel, a brake, a propeller, and the like.

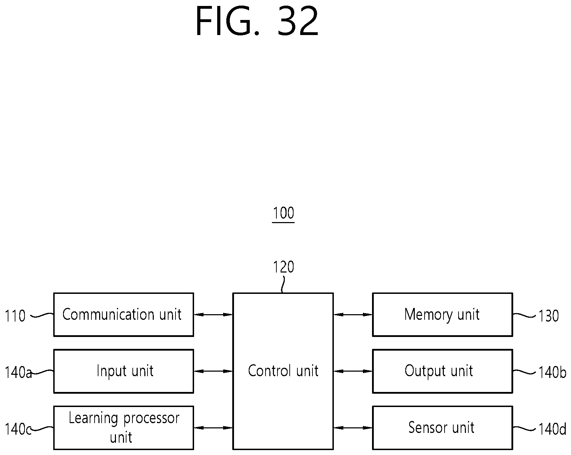

FIG. 32 illustrates an AI device applied to the present disclosure. AI devices may be implemented as fixed devices or moving devices such as TVs, projectors, smartphones, PCs, notebooks, digital broadcasting UEs, tablet PCs, wearable devices, set-top boxes (STBs), radios, washing machines, refrigerators, digital signage, robots, vehicles, etc.

Referring to FIG. 32, the AI device 100 may include a communication unit 110, a control unit 120, a memory unit 130, an input/output unit 140a/140b, a learning processor unit 140c, and a sensor unit. Blocks 110 to 130/140a to 140d correspond to blocks 110 to 130/140 of FIG. 26, respectively.

The communication unit 110 may transmit and receive wireless signals (e.g., sensor information, user input, learning model, control signals, etc.) with external devices such as another AI device (e.g., FIG. 46, 100x, 200, or 400) or an AI server (e.g., 400 in FIG. 46) using wired/wireless communication technology. To this end, the communication unit 110 may transmit information in the memory unit 130 to an external device or may transfer a signal received from the external device to the memory unit 130.

The control unit 120 may determine at least one executable operation of the AI device 100 based on information determined or generated using a data analysis algorithm or a machine learning algorithm. In addition, the control unit 120 may perform a determined operation by controlling the components of the AI device 100. For example, the control unit 120 may request, search, receive, or utilize data from the learning processor unit 140c or the memory unit 130, and may control components of the AI device 100 to execute a predicted operation among at least one an executable operation or an operation determined to be desirable. In addition, the control unit 120 may collect history information including operation content of the AI device 100 or the user's feedback on the operation, and store the collected information in the memory unit 130 or the learning processor unit 140c or transmit the information to an external device such as an AI server (400 of FIG. 46). The collected historical information may be used to update a learning model.

The memory unit 130 may store data supporting various functions of the AI device 100. For example, the memory unit 130 may store data obtained from the input unit 140a, data obtained from the communication unit 110, output data from the learning processor unit 140c, and data obtained from the sensing unit 140. In addition, the memory unit 130 may store control information and/or software codes necessary for the operation/execution of the control unit 120.

The input unit 140a may acquire various types of data from the outside of the AI device 100. For example, the input unit 140a may acquire training data for model training and input data to which the training model is applied. The input unit 140a may include a camera, a microphone, and/or a user input unit. The output unit 140b may generate output related to visual, auditory, or tactile sense. The output unit 140b may include a display unit, a speaker, and/or a haptic module. The sensing unit 140 may obtain at least one of internal information of the AI device 100, surrounding environment information of the AI device 100, and user information by using various sensors. The sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, and/or a radar.

The learning processor unit 140c may train a model configured as an artificial neural network using training data. The learning processor unit 140c may perform AI processing together with the learning processor unit (400 in FIG. 46) of the AI server. The learning processor unit 140c may process information received from an external device through the communication unit 110 and/or information stored in the memory unit 130. In addition, an output value of the learning processor unit 140c may be transmitted to an external device through the communication unit 110 and/or may be stored in the memory unit 130.

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of performing repeated transmission of a physical uplink shared channel (PUSCH) performed by a user equipment (UE) in a wireless communication system, the method comprising:

   performing scrambling on coded bits; and
   transmitting a first bit and a second bit generated based on the scrambling to a base station through PUSCH,
   wherein the first bit is transmitted through a first time resource and the second bit is transmitted through a second time resource,
   wherein the UE generates the first bit and the second bit by performing phase scrambling on a scrambled bit generated based on the scrambling, and
   wherein a phase of the first bit and a phase of the second bit are different from each other.

2. The method of claim 1, wherein the first bit and the second bit are generated based on a same transport block.

3. The method of claim 1, wherein the phase scrambling comprises multiplying the scrambled bit by a phase scrambling sequence.

4. The method of claim 3, wherein the phase scrambling sequence comprises one of values 1, -1, j and -j.

5. The method of claim 3, wherein the phase scrambling sequence comprises a value of one of 1 and -1.

6. The method of claim 3, wherein the phase scrambling is performed on a result of performing modulation on the scrambled bit.

7. The method of claim 3, wherein the phase scrambling is performed on a result of performing layer mapping on the scrambled bit.

8. The method of claim 3, wherein the phase scrambling is performed on a result of performing transform precoding on the scrambled bit.

9. The method of claim 3, wherein the phase scrambling is performed on a result of performing precoding on the scrambled bit.

10. The method of claim 1, wherein the first time resource and the second time resource are one of a slot unit time resource and a symbol unit time resource.

11. The method of claim 1, wherein the first bit is generated based on a first scrambling sequence and the second bit is generated based on a second scrambling sequence.

12. The method of claim 11, wherein the first scrambling sequence is generated based on an index of the first time resource, and the second scrambling sequence is generated based on an index of the second time resource.

13. The method of claim 11, wherein the first bit and the second bit are bits on which phase shift keying (PSK)-based modulation is performed.

14. The method of claim 13, wherein a bit size for each of the first bit and the second bit is 8 or less.

15. A user equipment (UE), the UE comprising:

    at least one memory storing instructions;
    at least one transceiver; and
    performing scrambling on coded bits; and
    transmitting a first bit and a second bit generated based on the scrambling to a base station through PUSCH,
    wherein the first bit is transmitted through a first time resource and the second bit is transmitted through a second time resource,
    wherein the UE generates the first bit and the second bit by performing phase scrambling on a scrambled bit generated based on the scrambling, and
    wherein a phase of the first bit and a phase of the second bit are different from each other.

16. An apparatus configured to control a user equipment (UE), the apparatus comprising:

    one or more processors; and
    performing scrambling on coded bits; and
    transmitting a first bit and a second bit generated based on the scrambling to a base station through PUSCH,
    wherein the first bit is transmitted through a first time resource and the second bit is transmitted through a second time resource,
    wherein the UE generates the first bit and the second bit by performing phase scrambling on a scrambled bit generated based on the scrambling, and
    wherein a phase of the first bit and a phase of the second bit are different from each other.

**17.** At least one computer readable medium (CRM) having an instruction to be executed by at least one processor to perform operations includes:

performing scrambling on coded bits; and
transmitting a first bit and a second bit generated based on the scrambling to a base station through PUSCH, wherein the first bit is transmitted through a first time resource and the second bit is transmitted through a second time resource,
wherein the UE generates the first bit and the second bit by performing phase scrambling on a scrambled bit generated based on the scrambling, and
wherein a phase of the first bit and a phase of the second bit are different from each other.

**18.** A receiving method for PUSCH repetition performed by a base station in a wireless communication system, the receiving method comprising:

receiving a first bit transmitted in a first time resource and a second bit transmitted in a second time resource from a user equipment (UE) through a PUSCH; and
decoding the first bit and the second bit,
wherein the first bit and the second bit are independently generated for a same transport block, and
wherein a phase of the first bit is different from a phase of the second bit.

**19.** A base station, the base station comprising:

one or more memories to store instructions;
one or more transceivers; and
one or more processors coupling the one or more memories and the one or more transceivers, wherein the one or more processors execute the instructions and adapted to:

receive a first bit transmitted in a first time resource and a second bit transmitted in a second time resource from a user equipment (UE) through a PUSCH; and
decode the first bit and the second bit,
wherein the first bit and the second bit are independently generated for a same transport block, and
wherein a phase of the first bit is different from a phase of the second bit.

# FIG. 1

# FIG. 2

# FIG. 3

# FIG. 4

EP 4 231 601 A1

AMF/UPF — 31

AMF/UPF — 31

5GC

NG

NG

NG

NG

NG

NG

NG

NG

NG-RAN

21 — gNB

21 — gNB

Xn

Xn

Xn

Xn

Xn

22 — ng-eNB

22 — ng-eNB

11

11

# FIG. 5

**gNB**

RRM between cells

RB control

Connection mobility control

Wireless access control

Measurement setting and provision

Dynamic resource allocation (scheduler)

NG-RAN

**AMF**

NAS security

Idle state mobility processing

**UPF**

Mobility anchoring

PDU processing

Internet

5GC

**SMF**

UE IP address allocation

PDU session control

# FIG. 6

# FIG. 7

Resource grid

A carrier
(up to 3300 subcarriers,
i.e., 275 RBs)

A BWP

1RB=12 subcarriers

1 RE

1subcarrier

1 symbol

l=0 • • •

k=0

# FIG. 8

PUSCH repetition type A

# FIG. 9

# FIG. 10

# FIG. 11

Carrier #0
Subband-wise Full Duplex

DL ⌒ UL

Carrier #0
Spectrum-Sharing Full Duplex

# FIG. 12

HD     SBFD     SBFD     SBFD     HD

DL    DL    DL    DL

DL    UL    UL    UL    UL

DL    DL    DL

freq

time

(a)

HD     SFFD     SFFD     SFFD     HD

DL    DL    DL

DL    DL+UL    DL+UL    DL+UL    UL

DL    DL    DL

freq

time

(b)

# FIG. 13

EP 4 231 601 A1

```
┌──────────────────┐    ┌──────────────┐    ┌──────────────┐    ┌──────────────┐
│  UL-SCH transport│───▶│  Coded bits  │───▶│  Scrambling  │───▶│  Modulation  │
│  block generation│    │  generation  │    │              │    │              │
└──────────────────┘    └──────────────┘    └──────────────┘    └──────┬───────┘
                                                                        │
                                                                        ▼
┌──────────────────┐    ┌──────────────┐    ┌──────────────┐    ┌──────────────┐
│    Mapping to    │◀───│   Precoding  │◀───│   Transform  │◀───│Layer mapping │
│ physical resource│    │              │    │   precoding  │    │              │
└──────────────────┘    └──────────────┘    └──────────────┘    └──────────────┘
```

# FIG. 14

EP 4 231 601 A1

BPSK

QPSK

8-PSK

# FIG. 15

# FIG. 16

· · · | Modulation | → | Phase scrambling | → | Layer mapping | · · ·

# FIG. 17

··· | Layer mapping | → | Phase scrambling | → | Transform precoding | ···

# FIG. 18

# FIG. 19

$\cdots$ | Transform precoding | $\rightarrow$ | Phase scrambling | $\rightarrow$ | Precoding | $\cdots$

# FIG. 20

··· | Precoding | → | Phase scrambling | → | Mapping to physical resource | ···

# FIG. 21

Performing scrambling on coded bits — S2110

Transmitting the first bit and the second bit
generated based on the scrambling
to the base station through the PUSCH — S2120

# FIG. 22

Receiving the first bit transmitted in
a first time resource and the second bit
transmitted in a second time resource
from the UE through the PUSCH
— S2210

Decoding the first bit and the second bit
— S2220

# FIG. 23

# FIG. 24

First Device 100

102 — Processor(s)    Transceiver(s) 106

104 Memory(s)

108    208

Second Device 200

Transceiver(s)    Processor(s) — 202

206 Memory(s) 204

# FIG. 25

1000(102/106, 202/206)

# FIG. 26

Device (100,200)

EP 4 231 601 A1

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 27

# FIG. 28

Car or autonomous vehicle (100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device (100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

# FIG. 29

1410

Virtual World

1420

Car or autonomous vehicle
(100)

Communication unit
(110)

Control unit
(120)

Memory unit
(130)

I/O unit (140a)
(e.g., HUD)

Positioning unit (140b)
(e.g., GPS, sensor)

# FIG. 30

XR device
(100a)

Communication unit
(110)

Control unit
(120)

Memory unit
(130)

I/O unit
(140a)

Sensor unit
(140b)

Power supply unit
(140c)

# FIG. 31

Robot
(100)

| Communication unit (110) |
| Control unit (120) |
| Memory unit (130) |
| I/O unit (140a) |
| Sensor unit (140b) |
| Driving unit (140c) |

EP 4 231 601 A1

# FIG. 32

<u>100</u>

<u>120</u>

110 — Communication unit ⟷ Control unit ⟷ Memory unit — 130

140a — Input unit ⟷ Control unit ⟷ Output unit — 140b

140c — Learning processor unit ⟷ Control unit ⟷ Sensor unit — 140d

## INTERNATIONAL SEARCH REPORT

International application No.

**PCT/KR2021/014449**

| A. | CLASSIFICATION OF SUBJECT MATTER |
|---|---|

**H04L 27/36**(2006.01)i; **H04L 5/00**(2006.01)i; **H04L 27/26**(2006.01)i; **H04L 25/03**(2006.01)i; **H04L 1/08**(2006.01)i; **H04W 72/12**(2009.01)i

According to International Patent Classification (IPC) or to both national classification and IPC

| B. | FIELDS SEARCHED |
|---|---|

Minimum documentation searched (classification system followed by classification symbols)

H04L 27/36(2006.01); H04L 1/00(2006.01); H04L 27/26(2006.01); H04L 5/00(2006.01); H04W 4/00(2009.01); H04W 72/04(2009.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 반복 전송(repeated transmission), 위상 스크램블링(phase scrambling), 제1-제2 비트(first and second bits), 제1-제2 시간 자원(first and second time resources)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2019-004729 A1 (LG ELECTRONICS INC.) 03 January 2019 (2019-01-03)<br>See paragraphs [0005]-[0006] and [0171]-[0213]; and figures 5 and 14. | 1-19 |
| Y | US 2019-0229860 A1 (SHARP KABUSHIKI KAISHA et al.) 25 July 2019 (2019-07-25)<br>See paragraphs [0066]-[0071] and [0226]; and figure 5. | 1-19 |
| A | JP 2020-072421 A (SHARP CORP.) 07 May 2020 (2020-05-07)<br>See paragraphs [0006]-[0009] and [0134]-[0164]; and figure 7. | 1-19 |
| A | US 2018-0041857 A1 (SHARP KABUSHIKI KAISHA) 08 February 2018 (2018-02-08)<br>See paragraphs [0318]-[0323]; claim 7; and figure 4. | 1-19 |
| A | US 2017-0013626 A1 (HUAWEI TECHNOLOGIES CO., LTD.) 12 January 2017 (2017-01-12)<br>See paragraphs [0114]-[0123]; and figures 1-2. | 1-19 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 January 2022** | **17 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/014449**

| Patent document cited in search report | | | Publication date (day/month/year) | Patent family member(s) | | | Publication date (day/month/year) |
|---|---|---|---|---|---|---|---|
| WO | 2019-004729 | A1 | 03 January 2019 | CN | 111052661 | A | 21 April 2020 |
| | | | | EP | 3648388 | A1 | 06 May 2020 |
| | | | | US | 2020-0178258 | A1 | 04 June 2020 |
| US | 2019-0229860 | A1 | 25 July 2019 | CN | 109792310 | A | 21 May 2019 |
| | | | | CN | 112332949 | A | 05 February 2021 |
| | | | | EP | 3487095 | A1 | 22 May 2019 |
| | | | | EP | 3487095 | B1 | 31 March 2021 |
| | | | | EP | 3832922 | A1 | 09 June 2021 |
| | | | | JP | 2021-040334 | A | 11 March 2021 |
| | | | | US | 10771202 | B2 | 08 September 2020 |
| | | | | US | 11018815 | B2 | 25 May 2021 |
| | | | | US | 2020-0344016 | A1 | 29 October 2020 |
| | | | | US | 2021-0242983 | A1 | 05 August 2021 |
| | | | | WO | 2018-012637 | A1 | 18 January 2018 |
| JP | 2020-072421 | A | 07 May 2020 | WO | 2020-091046 | A1 | 07 May 2020 |
| US | 2018-0041857 | A1 | 08 February 2018 | CN | 107432028 | A | 01 December 2017 |
| | | | | EP | 3253160 | A1 | 06 December 2017 |
| | | | | EP | 3253160 | B1 | 29 July 2020 |
| | | | | JP | 6785664 | B2 | 18 November 2020 |
| | | | | US | 10492047 | B2 | 26 November 2019 |
| | | | | WO | 2016-121537 | A1 | 04 August 2016 |
| US | 2017-0013626 | A1 | 12 January 2017 | CN | 105210434 | A | 30 December 2015 |
| | | | | CN | 105210434 | B | 15 January 2021 |
| | | | | EP | 3113557 | A1 | 04 January 2017 |
| | | | | EP | 3113557 | B1 | 18 December 2019 |
| | | | | KR | 10-1865643 | B1 | 08 June 2018 |
| | | | | KR | 10-2016-0132454 | A | 18 November 2016 |
| | | | | US | 10708922 | B2 | 07 July 2020 |
| | | | | WO | 2015-139326 | A1 | 24 September 2015 |

Form PCT/ISA/210 (patent family annex) (July 2019)